# EUROPEAN PATENT SPECIFICATION

(11) **EP 4 387 309 B1**
(45) Date of publication and mention of the grant of the patent: **11.11.2026**
(21) Application number: 22855377.2
(22) Date of filing: 08.08.2022
(51) Int. Cl.: H04L 41/0894, H04W 24/02, H04W 28/24, H04W 48/18, H04L 12/14, H04L 41/50, H04L 41/5051, H04M 15/00, H04L 41/5019, H04L 41/5067, H04W 76/11, H04W 76/22, H04W 88/14

(54) **COMPUTING SESSION UPDATING METHOD AND APPARATUS, AND COMMUNICATION DEVICE**
VERFAHREN UND VORRICHTUNG ZUR AKTUALISIERUNG EINER BERECHNUNGSSITZUNG UND KOMMUNIKATIONSVORRICHTUNG
PROCÉDÉ ET APPAREIL DE MISE À JOUR DE SESSION DE CALCUL, ET DISPOSITIF DE COMMUNICATION

(30) Priority: 10.08.2021 CN 202110915801
(43) Date of publication of application: 19.06.2024
(73) Proprietor: Vivo Mobile Communication Co., Ltd., Dongguan, Guangdong 523863 (CN)
(72) Inventor: KANG, Yanchao, Dongguan, Guangdong 523863 (CN); CHONG, Weiwei, Dongguan, Guangdong 523863 (CN); WU, Xiaobo, Dongguan, Guangdong 523863 (CN)
(74) Representative: Conti, Marco
(86) International application number: PCT/CN2022/110833
(87) International publication number: WO 2023/016396

(56) References cited:
- WO-A1-2020/150875
- WO-A1-2020/186145
- WO-A1-2020/249183
- WO-A1-2021/138069
- CN-A- 113 115 332
- US-B1- 7 929 443

## Description

### TECHNICAL FIELD

This application pertains to the field of communication technologies, and specifically, relates to a computing session update method and apparatus, a network function entity, and a terminal.

### BACKGROUND

Currently, only allocation of communication resources is provided in a communication system, and only a communication quality of service requirement of a terminal is ensured. In a case that the terminal or a third-party device needs to perform a particular complex computing task but does not have sufficient computing resources or capabilities, a wireless communication operator may provide corresponding computing resources and computing power. However, a communication system in the related art cannot have communication and computing requirements of a large number of users comprehensively considered, provide users with both communication resources and computing power resources that meet computing service requirements, or update allocation of communication resources and computing power resources in a network. WO2020/249183A1 discloses an apparatus, a method and a computer program for acknowledging changes in session information for protocol data unit (Protocol Data Unit, PDU) sessions.

### SUMMARY

Embodiments of this application provide a computing session update method and apparatus, a network function entity, and a terminal, so as to resolve a problem in the related art that a network cannot update, based on a change in a computing service requirement or a change in a network status, allocation of a communication resource and a computing power resource that are allocated to a user.

The invention is set out in the appended set of claims.

In the embodiments of this application, the first function can update, based on the obtained first message, at least one of the communication resource and the computing power resource for the computing session, so as to update allocation of a communication resource and/or a computing power resource in a network.

### BRIEF DESCRIPTION OF DRAWINGS

FIG. 1a is a first schematic diagram of a communication architecture to which the embodiments of this application are applicable;
FIG. 1b is a second schematic diagram of a communication architecture to which the embodiments of this application are applicable;
FIG. 2 is a first flowchart of a computing session update method according to an embodiment of this application;
FIG. 3 is a second flowchart of a computing session update method according to an embodiment of this application;
FIG. 4 is a third flowchart of a computing session update method according to an embodiment of this application;
FIG. 5 is a fourth flowchart of a computing session update method according to an embodiment of this application;
FIG. 6 is a fifth flowchart of a computing session update method according to an embodiment of this application;
FIG. 7 is a sixth flowchart of a computing session update method according to an embodiment of this application;
FIG. 8 is a seventh flowchart of a computing session update method according to an embodiment of this application;
FIG. 9 is a first structural diagram of a computing session update apparatus according to an embodiment of this application;
FIG. 10 is a second structural diagram of a computing session update apparatus according to an embodiment of this application;
FIG. 11 is a third structural diagram of a computing session update apparatus according to an embodiment of this application;
FIG. 12 is a fourth structural diagram of a computing session update apparatus according to an embodiment of this application;
FIG. 13 is a fifth structural diagram of a computing session update apparatus according to an embodiment of this application;
FIG. 14 is a structural diagram of a communication device according to an embodiment of this application; and
FIG. 15 is a structural diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application shall fall within the protection scope of this application.

The terms "first", "second", and the like in this specification and the claims of this application are used to distinguish between similar objects rather than to describe a specific order or sequence. It should be understood that terms used in this way are interchangeable in appropriate circumstances, so that the embodiments of this application can be implemented in an order other than the order illustrated or described herein. In addition, the objects distinguished by "first" and "second" usually belong to one category, and the number of objects is not limited. For example, there may be one or more first objects. In addition, in this specification and the claims, "and/or" represents at least one of connected objects, and the character "/" typically represents an "or" relationship between the associated objects.

It should be noted that the technologies described in the embodiments of this application are not limited to a long term evolution (Long Term Evolution, LTE)/LTE-advanced (LTE-Advanced, LTE-A) system, and may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably, and the technologies described herein may be used in the aforementioned systems and radio technologies, and may also be used in other systems and radio technologies. In the following descriptions, a new radio (New Radio, NR) system is described for an illustration purpose, and NR terms are used in most of the following descriptions, but these technologies may also be applied to applications other than an NR system application, for example, a 6th generation (6th Generation, 6G) communication system.

To better understand the technical solutions in the embodiments of this application, communication scenarios and related concepts that may be included in the embodiments of this application are described below.

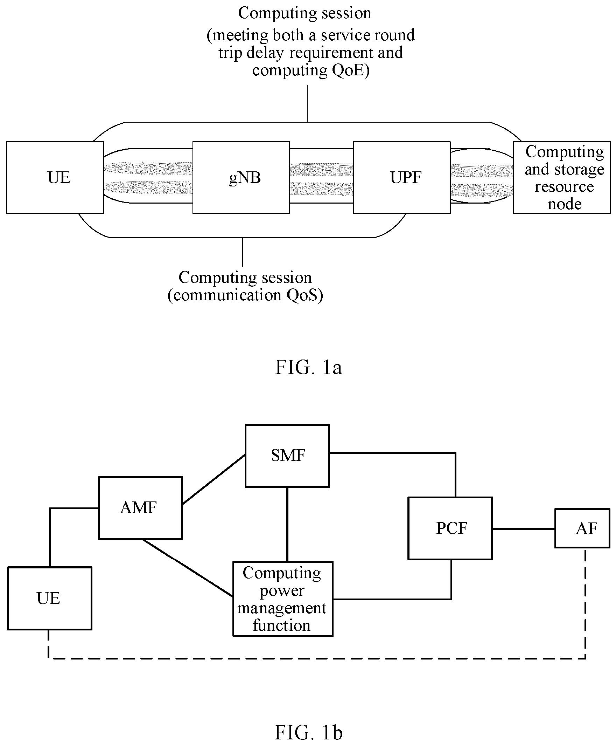

As shown in FIG. 1a, a computing power resource needs to be provided for a user. Therefore, in the embodiments of this application, a computing resource node (or referred to as a computing and storage resource node) or another new function entity is added to a network architecture for providing one or both of a computing resource and a storage resource. Management and updates of a communication resource and a computing power resource need to be considered. Therefore, in the embodiments of this application, a computing power management function, a computing power control function, or another similar function entity is added to the network architecture. Correspondingly, currently, in a communication system, a terminal (User Equipment, UE)-base station (NR NodeB, gNB)-user plane function (User Plane Function, UPF) user plane channel and a protocol data unit (Protocol Data Unit, PDU) session are established for a user to provide a communication service for the user. The established PDU session needs to meet a communication service requirement (Quality of Service, QoS) of the user. In the embodiments of this application, a UE-gNB-UPF-computing and storage resource node computing session is established for the user to provide a communication and computing service for the user. The computing session needs to meet a computing service requirement of the user, to be specific, meet both communication QoS and computing QoS of the computing service. The computing session includes a plurality of computing bearers. Each computing bearer has its own computing QoS and communication QoS, and needs to meet both a service round trip (round trip) delay requirement and a computing service requirement. The computing session may also be referred to as a PDU session during implementation. To be specific, the computing session is implemented as an enhanced PDU session. In this case, the computing bearer may also be referred to as a QoS flow or bearer during implementation.

FIG. 1b shows a network architecture according to an embodiment of this application. Network elements include a terminal (UE), a mobility management function (Access and Mobility Management Function, AMF), a session management function (Session Management Function, SMF), a computing power management function (also referred to as a computing power management network element), a policy control function (Policy Control Function, PCF), and an application function (Application Function, AF). The computing power management function is a new network element for managing and controlling a computing and storage resource node. As shown in FIG. 1b, the SMF can manage a user plane function (User Plane Function, UPF), to be specific, allocate a UPF-side communication resource and a base station-side communication resource for a user based on communication QoS of the user. The computing power management function can manage the computing and storage resource node, to be specific, allocate the computing and storage resource node based on computing QoS of the user.

The terminal may also be referred to as a terminal device or user equipment (User Equipment, UE). The terminal may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (VR) device, a robot, a wearable device (Wearable Device), vehicle user equipment (Vehicle User Equipment, VUE), pedestrian user equipment (Pedestrian User Equipment, PUE), or smart household (a home appliance with a wireless communication function, for example, a refrigerator, a television, a washing machine, or furniture). The wearable device includes a smart watch, a smart band, a smart headset, smart glasses, smart jewelry (a smart bangle, a smart bracelet, a smart ring, a smart necklace, a smart anklet, or a smart ankle chain), a smart wristband, smart clothing, a game console, and the like. It should be noted that a specific type of the terminal is not limited in this embodiment of this application.

The following describes in detail computing session update methods provided in the embodiments of this application by using some embodiments and application scenarios thereof with reference to the accompanying drawings.

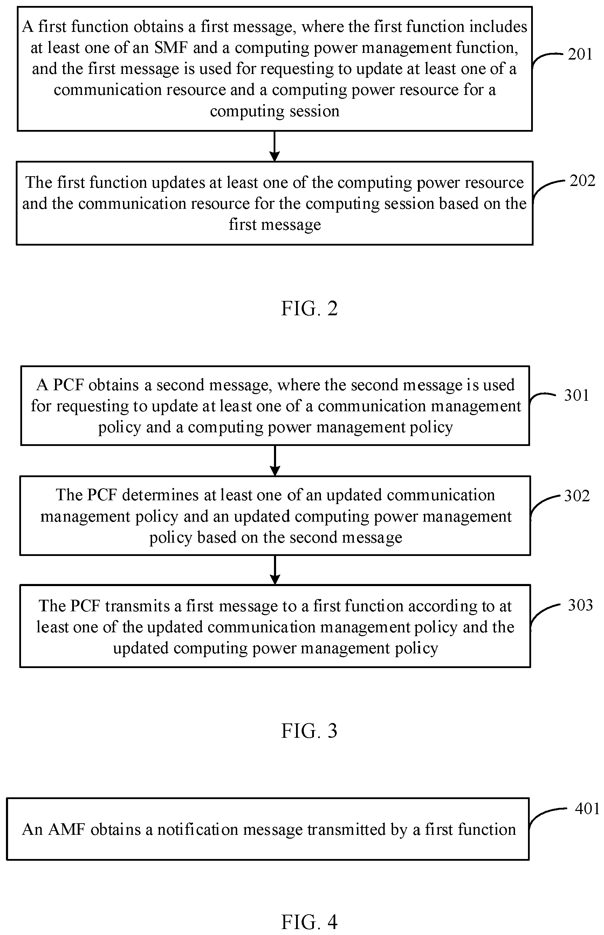

FIG. 2 is a first flowchart of a computing session update method according to an embodiment of this application. The computing session update method is performed by a first function. As shown in FIG. 2, the computing session update method includes the following steps.

Step 201: The first function obtains a first message, where the first function includes at least one of an SMF and a computing power management function, and the first message is used for requesting to update at least one of a communication resource and a computing power resource for a computing session.

Step 202: The first function updates at least one of the computing power resource and the communication resource for the computing session based on the first message.

The computing session is a session that includes both a communication resource and a computing power resource and that is established by a wireless mobile network to meet a computing service requirement of a user. The computing session is a special session between UE and a computing power management/computing power resource node. The computing session may further provide user data with a computing service requested by the user while transmitting communication data for the user. The computing session may include one or more computing bearers. Each computing bearer has its own computing QoS and communication QoS, and needs to meet both a service round trip (round trip) delay requirement and a computing service requirement. The computing session may also be referred to as a PDU session during implementation. To be specific, the computing session is implemented as an enhanced PDU session. User plane data transmission of the computing session is carried in a PDU session (session). To be specific, the data is transmitted to a computing power resource node through a channel of the PDU session for computing. In this case, the computing bearer may also be referred to as a QoS flow (flow) or a QoS bearer (bearer) during implementation. Optionally, a computing session identity document (Identity document, ID) identifies the computing session, and is allocated by the UE and transmitted to a network when the computing session is established. The computing session ID and a PDU session ID are in a one-to-one binding relationship. The binding relationship is determined by the UE, and is then transmitted to the network (UE and computing power control function layer ID) when the computing session is established.

Optionally, the computing power resource includes at least one of the following: a computing resource and a storage resource.

In this embodiment of this application, the first function includes at least one of the SMF and the computing power management function. For example, the first function includes only the SMF, in other words, the first function is an independently deployed SMF. Alternatively, the first function includes only the computing power management function, in other words, the first function is an independently deployed computing power management function. Alternatively, the first function may include both the SMF and the computing power management function. For example, the computing power management function may be a functional sub-module deployed in the SMF, or the SMF is a functional sub-module deployed in the computing power management function, or the SMF and the computing power management function are functional sub-modules deployed in a same network function entity.

Optionally, step 201 includes the following step:
The first function obtains a first message transmitted by a PCF.

In this embodiment of this application, the first function obtains the first message used for requesting to update the communication resource and/or the computing power resource for the computing session. For example, the first function may obtain the first message transmitted by the PCF, where the first message may carry at least one of an updated computing power management policy and an updated communication management policy, so that the first function determines updated computing power QoS information and/or updated communication QoS information based on at least one of the updated computing power management policy and the updated communication management policy, and the first function can update the computing power resource and/or the communication resource for the computing session.

It should be noted that the network can provide a communication and computing service for the user through a terminal, and the computing session needs to meet the computing service requirement of the user, where the computing service requirement includes both a communication requirement and a computing requirement. In this embodiment of this application, the first function can update a corresponding computing power resource and/or a corresponding communication resource for the computing session, so that data, related to the computing session, of the terminal can be transmitted to a computing and storage resource node, and the computing and storage resource node performs computing and feeds back a computing result. In this way, in a case that the terminal has a weak computing capability, the terminal can still complete a corresponding computing task, and both a processing delay (a transmission delay and a computing delay) and a computing result (for example, accuracy of a model trained by an AI model can meet a requirement) can meet a service requirement of the user. In addition, costs and power consumption of the terminal can be reduced.

In this embodiment of this application, the PCF may transmit the first message to the first function in a case that the PCF has obtained a second message. Optionally, that the PCF obtains a second message may include any one of the following:
the PCF obtains a second message transmitted by an AF;
the PCF obtains a second message transmitted by the SMF in a case that a communication resource of the SMF does not meet a preset communication resource; and
the PCF obtains a second message transmitted by the computing power management function in a case that a computing power resource of the computing power management function does not meet a preset computing power resource.

The AF may transmit the second message to the PCF in a case that the AF has received a computing service modification request from the terminal through application layer interaction. Optionally, the AF may directly transmit the second message to the PCF, or may transmit the second message to the PCF through a network exposure function (Network Exposure Function, NEF).

For example, the PCF receives the second message transmitted by the AF, the AF transmits an overall computing service requirement to the PCF through the second message, and the PCF determines, through coordination, the updated computing power management policy and the updated communication management policy according to the computing service requirement. Alternatively, the AF may divide the computing service requirement into a computing power requirement and a communication requirement, and then the PCF determines the updated computing power management policy and the updated communication management policy according to the computing power requirement and the communication requirement respectively.

Optionally, the second message may be a computing service modification request, and the second message includes at least one of the following: a terminal identifier, a computing service identifier, a PDU session identifier, a computing session identifier, a computing service requirement, a computing service quality of experience (Quality of Experience, QoE) requirement, a data network name (Data Network Name, DNN), and single network slice selection assistance information (Single Network Slice Selection Assistance Information, S-NSSAI).

The terminal identifier may be an internet protocol (Internet Protocol, IP) address of the terminal, an external identifier of the terminal, or the like. The computing service identifier may be an identifier allocated to the terminal for a computing service. The computing service QoE requirement may include a computing task delay and/or a computing service error rate. The computing service requirement includes at least one of the following: delay information of the computing service, an accuracy rate of the computing service, a computing volume of the computing service, a storage requirement, a type of the computing service, and an IP address of the computing service.

In addition, in a case that the PCF obtains the second message transmitted by the SMF or in a case that the PCF obtains the second message transmitted by the computing power management function, the second message further includes at least one of the following: a policy update request indication, a communication QoS status notification, and a computing power QoS status notification.

Optionally, the first message includes at least one of the following: a terminal identifier, a PDU session identifier, a computing session identifier, an updated computing power management policy, and an updated communication management policy.

In this embodiment of this application, step 202 may include the following steps:

The first function obtains at least one of an updated computing power management policy and an updated communication management policy based on the first message.

The first function determines updated communication QoS information according to the obtained updated communication management policy, and updates allocation of the communication resource for the computing session based on the determined updated communication QoS information in a case that the first function includes the SMF and has obtained the updated communication management policy.

The first function determines updated computing power QoS information according to the obtained updated computing power management policy, and updates allocation of the computing power resource for the computing session based on the determined updated computing power QoS information in a case that the first function includes the computing power management function and has obtained the updated computing power management policy.

It can be understood that the first message may carry at least one of the updated computing power management policy and the updated communication management policy, so that the first function can determine the updated computing power QoS information and/or the updated communication QoS information based on at least one of the updated computing power management policy and the updated communication management policy, and the first function can update the computing power resource and/or the communication resource for the computing session.

For example, in an implementation, the first function includes the SMF, or the first function is the SMF, and the computing power management function is an independently deployed network function, that is, the first function does not include the computing power management function. After obtaining the second message transmitted by the AF, the PCF queries for a corresponding SMF and computing power management function in a context of the computing session. The PCF determines the updated communication management policy and computing power management policy based on the second message, and transmits a first message to each of the corresponding SMF and computing power management function, where a first message transmitted to the SMF carries the updated communication management policy, and a first message transmitted to the computing power management function carries the updated computing power management policy. The SMF determines updated QoS information according to the obtained updated communication management policy, and updates allocation of the communication resource for the computing session based on the updated QoS information. The computing power management function determines the updated computing power QoS information according to the obtained updated computing power management policy, and updates allocation of the computing power resource for the computing session based on the updated computing power QoS information.

Optionally, in a case that the first function includes the SMF and the SMF has obtained the updated communication management policy, that the first function determines updated communication QoS information according to the obtained updated communication management policy, and updates allocation of the communication resource for the computing session based on the determined updated communication QoS information includes:
the first function determines the updated communication QoS information according to the obtained updated communication management policy; and
the first function transmits an updated N4 interface rule to a UPF, to enable the UPF to update the communication resource for the computing session according to the updated N4 interface rule, where the updated N4 interface rule is obtained based on the updated communication QoS information.

For example, in a case that the first function includes only the SMF, or the first function includes the SMF and the computing power management function, and the first function has obtained the updated communication management policy, the first function determines the updated communication QoS information according to the obtained updated communication management policy, obtains the updated N4 interface rule based on the updated communication QoS information, and transmits the updated N4 interface rule to the UPF, to enable the UPF to update a communication resource for a corresponding computing session according to the updated N4 interface rule.

It should be noted that the first function can further transfer the updated communication QoS information to a base station and the terminal after determining the updated communication QoS information.

Optionally, that the first function determines updated computing power QoS information according to the obtained updated computing power management policy, and updates allocation of the computing power resource for the computing session based on the determined updated computing power QoS information in a case that the first function includes the computing power management function and has obtained the updated computing power management policy includes:
the first function determines the updated computing power QoS information according to the obtained updated computing power management policy; and
the first function transmits the updated computing power QoS information to a computing and storage resource node, to enable the computing and storage resource node to update the computing power resource for the computing session based on the updated computing power QoS information.

For example, in a case that the first function includes only the computing power management function, or the first function includes the SMF and the computing power management function, and the first function has obtained the updated computing power management policy, the first function determines the updated computing power QoS information according to the updated computing power management policy, and transmits the updated computing power QoS information to a selected computing and storage resource node, so that the computing and storage resource node can update the computing power resource for the computing session based on the updated computing power QoS information.

It should be noted that a computing capability of the computing and storage resource node selected by the computing power management function can meet a computing resource requirement and a storage resource requirement in the computing power QoS information. For example, the computing resource requirement may be a requirement for at least 100 units of graphics processing unit (Graphics Processing Unit, GPU) resources, a requirement for supporting a specific algorithm (for example, a deep neural network (Deep Neural Networks, DNN) algorithm), or the like; and the storage resource requirement may be a requirement for 100 units of storage resources, or the like. This embodiment of this application does not provide too many examples herein.

Further, after the first function transmits the updated computing power QoS information to the computing and storage resource node, the method further includes:
the first function receives a feedback message transmitted by the computing and storage resource node, where the feedback message includes at least one of the following: a computing resource IP address, a storage resource IP address, a computing resource size, and a storage resource size.

It can be understood that, after updating the computing power resource for the computing session based on the updated computing power QoS information, the computing and storage resource node can obtain information such as the computing resource IP address, the computing resource size, the storage resource IP address, and the storage resource size based on an updated computing power resource for the computing session, and feed back the information to the computing power management function of the first function, so that the computing power management function can learn of a status of the computing and storage resource node.

Optionally, the computing power QoS information includes at least one of the following: computing power, a sample data volume, a storage resource, a computing delay, a computing accuracy rate, and a computing speed.

In this embodiment of this application, after step 202, the method further includes the following step:
The first function transmits, to the PCF, a third message used for responding to the first message.

It should be noted that the first function updates the computing power resource and/or the communication resource for the computing session based on the first message transmitted by the PCF, and after the update is completed, the first function may transmit the third message to the PCF to respond to the first message transmitted by the PCF.

For example, the first function includes the SMF. As described in the foregoing embodiment, the SMF has received the first message transmitted by the PCF, where the first message carries the updated communication management policy. After the SMF updates the communication resource for the computing session based on the first message, the SMF transmits the third message to the PCF, where the third message may be a communication management policy update response.

Alternatively, if the first function includes the computing power management function, the computing power management function has received the first message transmitted by the PCF, where the first message carries the updated computing power management policy. After the computing power management function updates the computing power resource for the computing session based on the first message, the computing power management function transmits the third message to the PCF, where the third message may be a computing power management policy update response.

Alternatively, if the first function includes the SMF and the computing power management function, after the first function updates the communication resource and the computing power resource for the computing session based on the first message, the first function transmits the third message to the PCF, where the third message may include a communication management policy response and a computing power management policy update response.

Optionally, after step 202, the method may further include the following step:
The first function transmits a fourth message to the terminal through an AMF, where the fourth message is used to indicate at least one of an updated computing power resource and an updated communication resource that are allocated by the first function.

The first function may first transmit a notification message to the AMF, where the notification message is used to indicate at least one of the updated computing power resource and the updated communication resource that are allocated by the first function. The AMF transmits the fourth message to the terminal based on the notification message, to notify the terminal of the updated computing power resource and/or the updated communication resource for the computing session.

It should be noted that the first function includes at least one of the SMF and the computing power management function. Therefore, that the first function transmits a fourth message to the terminal through an AMF also includes several possible cases. Optionally, that the first function transmits a fourth message to the terminal through an AMF includes any one of the following:
in a case that the first function includes the SMF, the first function transmits a first notification message to the AMF, so that the AMF transmits the fourth message to the terminal based on the first notification message;
in a case that the first function includes the computing power management function, the first function transmits a second notification message to the AMF, so that the AMF transmits the fourth message to the terminal based on the second notification message;
in a case that the first function includes the SMF, the computing power management function notifies the SMF of a computing power resource allocation status of the computing power management function, and the first function transmits a third notification message to the AMF, so that the AMF transmits the fourth message to the terminal based on the third notification message; and
in a case that the first function includes the computing power management function, the SMF notifies the computing power management function of a communication resource allocation status of the SMF, and the first function transmits a fourth notification message to the AMF, so that the AMF transmits the fourth message to the terminal based on the fourth notification message.

For example, if the first function includes only the SMF or the first function includes the SMF and the computing power management function, after the first function updates the computing power resource and/or the communication resource for the computing session based on the first message, the first function may transmit the first notification message to the AMF. For example, the first notification message includes a PDU session modification command or a computing session modification command. The AMF can transmit the fourth message to the terminal based on the first notification message, to notify the terminal of the updated computing power resource and/or the updated communication resource for the computing session. The fourth message includes the PDU session modification command or the computing session modification command.

Alternatively, if the first function includes only the SMF, the first function updates the communication resource for the computing session based on the first message, the computing power management function updates the computing power resource for the computing session based on the first message, and the computing power management function notifies the SMF of the computing power resource allocation status of the computing power management function. Further, the SMF transmits the third notification message to the AMF based on the computing power resource allocation status and the communication resource allocation status of the SMF. For example, the third notification message includes a PDU session modification command or a computing session modification command. The AMF can transmit the fourth message to the terminal based on the third notification message, to notify the terminal of the updated computing power resource and/or the updated communication resource for the computing session. The fourth message includes the PDU session modification command or the computing session modification command.

Alternatively, if the first function includes only the computing power management function or includes the SMF and the computing power management function, after the first function updates the computing power resource and/or the communication resource for the computing session based on the first message, the first function may transmit the second notification message to the AMF. For example, the second notification message includes a PDU session modification command or a computing session modification command. The AMF can transmit the fourth message to the terminal based on the first notification message, to notify the terminal of the updated computing power resource and/or the updated communication resource for the computing session. The fourth message includes the PDU session modification command or the computing session modification command.

Alternatively, if the first function includes only the computing power management function, the first function updates the computing power resource for the computing session based on the first message, the SMF updates the communication resource for the computing session based on the first message, and the SMF can notify the computing power management function of the communication resource allocation status of the SMF. Further, the computing power management function transmits the fourth notification message to the AMF based on the communication resource allocation status and the computing power resource allocation status of the computing power management function. For example, the third notification message includes a PDU session modification command or a computing session modification command. The AMF can transmit the fourth message to the terminal based on the fourth notification message, to notify the terminal of the updated computing power resource and/or the updated communication resource for the computing session. The fourth message includes the PDU session modification command or the computing session modification command.

Further, the method further includes the following step:
The first function receives a fifth message transmitted by the AMF, where the fifth message is used for responding to any one of the first notification message, the second notification message, the third notification message, and the fourth notification message.

In this embodiment of this application, after the terminal has received the fourth message transmitted by the AMF, the terminal transmits, to the AMF, a seventh message used for responding to the fourth message, to notify the AMF that the terminal has learned of the updated computing power resource and/or the updated communication resource for the computing session, where the seventh message includes a PDU session modification complete message or a computing session modification complete message. Further, the AMF can transmit the fifth message to the first function based on the seventh message, to respond to a notification message transmitted by the first function, where the notification message is any one of the first notification message, the second notification message, the third notification message, and the fourth notification message. For example, if the notification message transmitted by the first function to the AMF is the first notification message, the fifth message transmitted by the AMF to the first function is used for responding to the first notification message. The fifth message includes the PDU session modification complete message or the computing session modification complete message.

In the solution provided in this embodiment of this application, the first function can update, based on the obtained first message, at least one of the communication resource and the computing power resource for the computing session, to update and allocate a communication resource and/or a computing power resource in the network.

FIG. 3 is a second flowchart of a computing session update method according to an embodiment of this application. The computing session update method is performed by a PCF. As shown in FIG. 3, the computing session update method includes the following steps.

Step 301: The PCF obtains a second message, where the second message is used for requesting to update at least one of a communication management policy and a computing power management policy.

Step 302: The PCF determines at least one of an updated communication management policy and an updated computing power management policy based on the second message.

Step 303: The PCF transmits a first message to a first function according to at least one of the updated communication management policy and the updated computing power management policy.

The first function includes at least one of a session management function SMF and a computing power management function. The first message is used for requesting to update at least one of a communication resource and a computing power resource for a computing session.

Optionally, the computing power resource includes at least one of the following: a computing resource and a storage resource.

Optionally, the first message includes at least one of the following: a terminal identifier, a PDU session identifier, a computing session identifier, the updated computing power management policy, and the updated communication management policy.

In this embodiment of this application, after obtaining the second message, the PCF determines the updated communication management policy and/or the updated computing power management policy based on the second message, and can transmit the first message to the first function according to the updated communication management policy and/or the updated computing power management policy, so that the first function updates a corresponding communication resource and/or a corresponding computing power resource for the computing session based on the first message, data, related to the computing session, of a terminal can be transmitted to a computing resource node, and the computing resource node performs computing and feeds back a computing result. In this way, in a case that the terminal has a weak computing capability, the terminal can still complete a corresponding computing task, and both a processing delay (a transmission delay and a computing delay) and a computing result (for example, accuracy of a model trained by an AI model can meet a requirement) can meet a service requirement of the user. In addition, costs and power consumption of the terminal can be reduced.

Optionally, that the PCF obtains a second message includes any one of the following:
the PCF obtains a second message transmitted by an AF;
the PCF obtains a second message transmitted by the SMF in a case that a communication resource of the SMF does not meet a preset communication resource; and
the PCF obtains a second message transmitted by the computing power management function in a case that a computing power resource of the computing power management function does not meet a preset computing power resource.

The AF may transmit the second message to the PCF in a case that the AF has received a computing service modification request from the terminal through application layer interaction. Optionally, the AF may directly transmit the second message to the PCF, or may transmit the second message to the PCF through an NEF.

For example, the PCF receives the second message transmitted by the AF, the AF transmits an overall computing service requirement to the PCF through the second message, and the PCF determines, through coordination, the updated computing power management policy and the updated communication management policy according to the computing service requirement. Alternatively, the AF may divide the computing service requirement into a computing power requirement and a communication requirement, and then the PCF determines the updated computing power management policy and the updated communication management policy according to the computing power requirement and the communication requirement respectively.

Optionally, the second message may be a computing service modification request, and the second message includes at least one of the following: a terminal identifier, a computing service identifier, a PDU session identifier, a computing session identifier, a computing service requirement, a computing service QoE requirement, a DNN, and S-NSSAI.

Optionally, the computing service requirement includes at least one of the following: delay information of the computing service, an accuracy rate of the computing service, a computing volume of the computing service, a storage requirement, a type of the computing service, and an IP address of the computing service.

In addition, in a case that the PCF obtains the second message transmitted by the SMF or in a case that the PCF obtains the second message transmitted by the computing power management function, the second message further includes at least one of the following: a policy update request indication, a communication QoS status notification, and a computing power QoS status notification.

In this embodiment of this application, before step 303, the method may further include the following step:
The PCF determines, based on the second message, the first function corresponding to the computing session.

Specifically, after the PCF obtains the second message used for requesting to update the communication management policy and/or the computing power management policy, the PCF may determine the corresponding first function in a context of the computing session based on the second message, to be specific, determine a corresponding SMF and/or a corresponding computing power management function.

For example, the PCF receives the second message transmitted by the AF to trigger the PCF to determine the updated communication management policy and the updated computing power management policy that correspond to the computing session, where the updated communication management policy needs to be transmitted to the SMF corresponding to the computing session, and the updated computing power management policy needs to be transmitted to the computing power management function corresponding to the computing session. In this case, before transmitting the updated communication management policy and the updated computing power management policy, the PCF needs to determine the SMF and the computing power management function that correspond to the computing session, to transmit the updated communication management policy and the updated computing power management policy to the SMF and the computing power management function respectively.

Optionally, after step 303, the method may further include the following step:
The PCF receives a third message that is transmitted by the first function and that is used for responding to the first message.

In this embodiment of this application, after the PCF transmits the first message to the first function, the first function updates the computing power resource and/or the communication resource for the computing session according to the updated computing power management policy and/or the updated communication management policy that are carried in the first message. For a specific implementation of updating, by the first function, the computing power resource and/or the communication resource for the computing session based on the first message, refer to the descriptions in the embodiment of FIG. 2. Details are not described in this embodiment of this application again.

Further, after the first function updates the computing power resource and/or the communication resource for the computing session based on the first message, the first function transmits the third message to the PCF to respond to the first message transmitted by the PCF. For example, if the first function includes the SMF, after the SMF updates the communication resource for the computing session based on the first message, the SMF transmits the third message to the PCF, where the third message may be a communication management policy update response.

Alternatively, if the first function includes the computing power management function, after the computing power management function updates the computing power resource for the computing session based on the first message, the computing power management function transmits the third message to the PCF, where the third message may be a computing power management policy update response.

Alternatively, if the first function includes the SMF and the computing power management function, after the first function updates the communication resource and the computing power resource for the computing session based on the first message, the first function transmits the third message to the PCF, where the third message may include a communication management policy response and a computing power management policy update response.

In this embodiment of this application, after obtaining the second message, the PCF determines the updated communication management policy and/or the updated computing power management policy based on the second message, and can transmit the first message to the first function according to the updated communication management policy and/or the updated computing power management policy, so that the first function updates and allocates the communication resource and/or the computing power resource for the computing session based on the first message.

FIG. 4 is a third flowchart of a computing session update method according to an embodiment of this application. The computing session update method is performed by an AMF. As shown in FIG. 4, the computing session update method includes the following steps.

Step 401: The AMF obtains a notification message transmitted by a first function.

The first function includes at least one of a session management function SMF and a computing power management function. The notification message is triggered after the first function updates at least one of a computing power resource and a communication resource for a computing session based on a first message.

It should be noted that, in the method in this embodiment of this application, after the first function updates at least one of the computing power resource and the communication resource for the computing session based on the first message, the first function transmits the notification message to the AMF to notify the AMF of an updated computing power resource and/or an updated communication resource for the computing session. For a specific implementation of updating, by the first function, at least one of the computing power resource and the communication resource for the computing session based on the first message, refer to the descriptions in the embodiment of FIG. 2. The first function includes the SMF and/or the computing power management function. Therefore, there may be different implementations of obtaining, by the AMF, the notification message transmitted by the first function. For example, the notification message is any one of a first notification message, a second notification message, a third notification message, and a fourth notification message. For a specific implementation, still refer to the descriptions in the embodiment of FIG. 2. Details are not described in this embodiment again.

Optionally, the notification message includes at least one of the following: a PDU session identifier, a computing session identifier, communication resource update information, a communication quality of service QoS rule, computing power resource update information, and a computing power QoS rule.

The computing power resource update information includes at least one of the following: a computing resource IP address, a storage resource IP address, a computing resource size, and a storage resource size.

In this embodiment of this application, after step 401, the method may further include at least one of the following:
the AMF transmits a fourth message to a terminal based on the notification message, where the fourth message is used to indicate at least one of a computing power resource and a communication resource that are updated by the first function for the computing session; and
the AMF transmits a sixth message to a base station-side device based on the notification message, where the sixth message is used to indicate the communication resource updated by the first function for the computing session.

It can be understood that, after obtaining the notification message transmitted by the first function, the AMF can learn of the computing power resource and/or the communication resource that are updated by the first function for the computing session. In this case, the AMF transmits the fourth message and the sixth message to the terminal and the base station-side device respectively, to notify the terminal of the updated computing power resource and/or the updated communication resource for the computing session, and notify the base station-side device of the updated communication resource for the computing session.

Further, after the AMF transmits the fourth message to the terminal based on the notification message, the method further includes the following steps:
The AMF receives a seventh message that is transmitted by the terminal and that is used for responding to the fourth message.

The AMF transmits a fifth message to the first function based on the seventh message, where the fifth message is used for responding to the notification message.

Specifically, after the AMF transmits the fourth message to the terminal, the terminal can transmit the seventh message to the AMF, to notify the AMF that the terminal has learned of the updated computing power resource and/or the updated communication resource for the computing session, where the seventh message may include a PDU session modification complete message. Further, the AMF can transmit the fifth message to the first function based on the seventh message, to respond to the notification message transmitted by the first function, where the fifth message may include a PDU session modification complete message.

In this embodiment of this application, the fourth message includes at least one of the following: a PDU session identifier, a computing session identifier, communication resource update information, a communication QoS rule, computing power resource update information, and a computing power QoS rule.

The computing power resource update information includes at least one of the following: a computing resource IP address, a storage resource IP address, a computing resource size, and a storage resource size.

In this embodiment of this application, the AMF obtains the notification message transmitted by the first function, to learn of the computing power resource and/or the communication resource that are updated by the first function for the computing session, so that a network function in a communication network can learn of the update and the allocation of the computing power resource and/or the communication resource for the computing session.

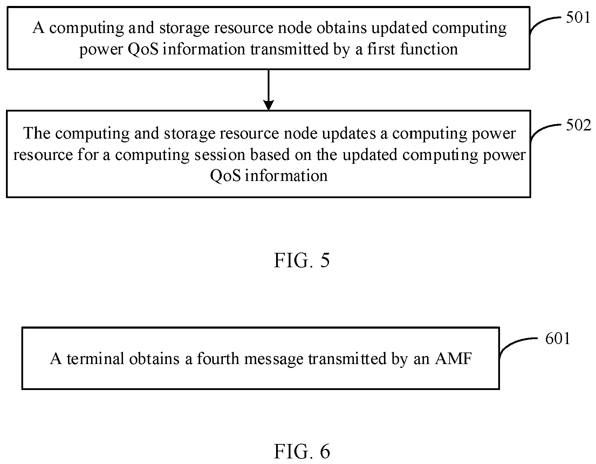

FIG. 5 is a fourth flowchart of a computing session update method according to an embodiment of this application. The computing session update method is performed by a computing and storage resource node. As shown in FIG. 5, the computing session update method includes the following steps.

Step 501: The computing and storage resource node obtains updated computing power QoS information transmitted by a first function.

Step 502: The computing and storage resource node updates a computing power resource for a computing session based on the updated computing power QoS information.

The first function includes at least one of a session management function SMF and a computing power management function. The updated computing power QoS information is determined by the first function according to an updated computing power management policy obtained by the first function based on a first message. The first message is used for requesting to update at least one of a communication resource and the computing power resource for the computing session.

In this embodiment of this application, after the first function obtains the first message used for requesting to update the communication resource and/or the computing power resource for the computing session, the first function can obtain the updated computing power management policy based on the first message, and determine the updated computing power QoS information according to the updated computing power management policy. The first function transmits the updated computing power QoS information to the computing and storage resource node, to enable the computing and storage resource node to update the computing power resource for the computing session based on the updated computing power QoS information. For a specific implementation of determining, by the first function, the updated computing power QoS information, refer to the descriptions in the embodiment of FIG. 2. Details are not described in this embodiment of this application again.

Optionally, after the computing and storage resource node updates the computing power resource for the computing session based on the updated computing power QoS information, the method further includes the following step:
The computing and storage resource node transmits a feedback message to the first function, where the feedback message includes at least one of the following: a computing resource internet protocol IP address, a storage resource IP address, a computing resource size, and a storage resource size.

Specifically, after updating the computing power resource for the computing session based on the updated computing power QoS information, the computing and storage resource node can obtain information such as the computing resource IP address, the computing resource size, the storage resource IP address, and the storage resource size based on an updated computing power resource for the computing session, and feed back the information to the first function, so that the first function can learn of a status of the computing and storage resource node.

In this embodiment of this application, data related to the computing session can be transmitted to the computing and storage resource node, and the computing and storage resource node performs computing and feeds back a computing result. In this way, in a case that a terminal has a weak computing capability, the terminal can still complete a corresponding computing task, thereby reducing costs and power consumption of the terminal.

FIG. 6 is a fifth flowchart of a computing session update method according to an embodiment of this application. The computing session update method is performed by a terminal. As shown in FIG. 6, the computing session update method includes the following steps.

Step 601: The terminal obtains a fourth message transmitted by an AMF.

The fourth message is used to indicate at least one of a computing power resource and a communication resource that are updated by a first function for a computing session. The first function includes at least one of a session management function SMF and a computing power management function.

Optionally, the fourth message includes at least one of the following: a PDU session identifier, a computing session identifier, communication resource update information, a communication quality of service QoS rule, computing power resource update information, and a computing power QoS rule.

The computing power resource update information includes at least one of the following: a computing resource internet protocol IP address, a storage resource IP address, a computing resource size, and a storage resource size.

In this embodiment of this application, after obtaining a notification message transmitted by the first function, the AMF can learn of a computing power resource and/or a communication resource that are updated by the first function for the computing session. In this case, the AMF transmits the fourth message to the terminal, so that the terminal can learn of the updated computing power resource and/or the updated communication resource for the computing session.

Optionally, after step 601, the method further includes the following step:

The terminal transmits, to the AMF, a seventh message used for responding to the fourth message.

In this embodiment of this application, after the AMF transmits the fourth message to the terminal, the terminal can transmit the seventh message to the AMF, to notify the AMF that the terminal has learned of the updated computing power resource and/or the updated communication resource for the computing session, where the seventh message may include a PDU session modification complete message.

To better understand the computing session update method provided in this application, the following specifically describes the computing session update method provided in this application with reference to specific communication scenarios.

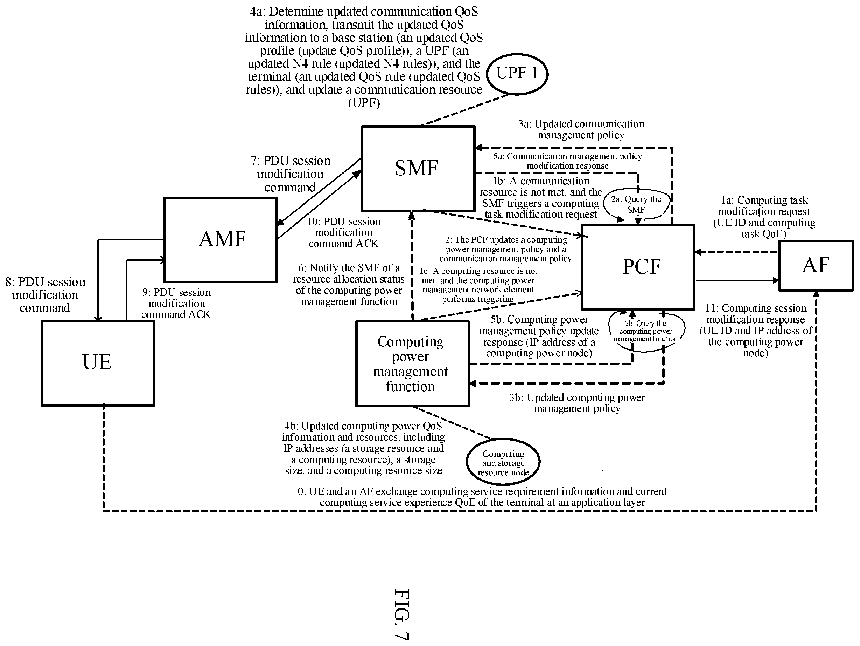

FIG. 7 is a sixth flowchart of a computing session update method according to an embodiment of this application. As shown in FIG. 7, the computing session update method includes the following specific steps.

Step 0: UE and an AF exchange computing service requirement information and current computing service experience QoE of the terminal at an application layer to obtain a computing service requirement that needs to be indicated to a network.

Step 1: A PCF obtains a second message, where the second message is used for requesting to update at least one of a communication management policy and a computing power management policy. The second message may include a terminal identifier, a computing service identifier, a PDU session identifier, a computing session identifier, a computing service requirement, and the like. For details, refer to the descriptions of the second message in the foregoing embodiments. Details are not described herein again. Optionally, step 1 may include any one of the following steps 1a to 1c.

Step 1a: The PCF obtains a second message transmitted by the AF.

Step 1b: The PCF obtains a second message transmitted by an SMF in a case that a communication resource of the SMF does not meet a preset communication resource, where the second message includes at least a policy update request indication and a communication QoS status notification.

Step 1c: The PCF obtains a second message transmitted by a computing power management function in a case that a computing power resource of the computing power management function does not meet a preset computing power resource, where the second message includes at least a policy update request indication and a computing power QoS status notification.

Step 2a: The PCF queries, based on the second message, for an SMF corresponding to a computing session. A trigger condition for this step is as follows: The PCF determines that a communication management policy currently corresponding to the UE cannot meet a computing service requirement of a request of the second message, in other words, the PCF determines that the communication management policy currently corresponding to the UE needs to be modified. A purpose of the step is to enable the PCF to initiate a subsequent communication management policy update process to the SMF. Specifically, the PCF may query, based on a context record of the PCF or from a UDM, for the SMF corresponding to the computing session of the UE.

Step 2b: The PCF queries, based on the second message, for a computing power management function corresponding to the computing session. A trigger condition for this step is as follows: The PCF determines that a computing power management policy currently corresponding to the UE cannot meet a computing service requirement of a request of the second message, in other words, the PCF determines that the computing power management policy currently corresponding to the UE needs to be modified. A purpose of the step is to enable the PCF to initiate a subsequent computing power management policy update process to the computing power management function. Specifically, the PCF may query, based on a historical record of the PCF or from the UDM, for the computing power management function corresponding to the computing session of the UE.

Step 3a: The PCF transmits an updated communication management policy to the SMF to trigger the communication management policy update process of the SMF. The communication management policy update process of the SMF subsequently triggers the SMF to initiate a PDU session modification process to modify a specific QoS flow in a PDU session or create a QoS flow, so as to ensure that the QoS flow can adapt to a QoS requirement corresponding to the computing session.

Step 3b: The PCF transmits an updated computing power management policy to the computing power management function. For example, the PCF initiates a computing power modification request message to the computing power management function. The computing power modification request message includes the updated computing power management policy. The computing power modification request message may further include information that is related to the computing session and that is transmitted by the AF, for example, include a computing task type, a computing session identifier, and a computing service QoE requirement.

Step 4a: The SMF determines updated communication QoS information according to the obtained updated communication management policy, and transmits the updated communication QoS information to a base station-side device (an updated QoS profile (profile)), a UPF (an updated N4 interface rule), and the terminal (updated communication QoS). Specifically, the SMF triggers the PDU session modification process based on the communication management policy update process, for example, modifies a corresponding N4 interface rule, or establishes or modifies an N3 tunnel to trigger a QoS flow establishment or modification process.

Step 4b: The computing power management function determines updated computing power QoS information according to the obtained updated computing power management policy, and transmits the updated computing power QoS information to a computing and storage resource node. The computing power management function selects a corresponding computing and storage resource node based on the updated computing power QoS information. The selected computing and storage resource node has a computing function and a storage function. The two functions may be combined and deployed on one node, or may be separately deployed on different nodes. A computing capability of the selected computing and storage resource node meets a computing resource requirement and a storage resource requirement in the computing power management policy.

Step 5a: The SMF transmits a communication policy update response to the PCF to notify the PCF of whether the communication management policy in step 4a is successfully updated.

Step 5b: The computing power management function transmits a computing power policy update response to the PCF. The computing power policy update response includes identification information or IP address information of the computing and storage resource node allocated by the computing power management function. The identification information the computing and storage resource node is used for addressing the computing and storage resource node. Subsequently, the UE transmits uplink computing task data to the computing and storage resource node for computing. The IP address is used as a destination IP address for the UE to transmit the uplink computing task data, to ensure that the computing task data can be transmitted to the computing and storage resource node for computing.

Step 6: The computing power management function notifies the SMF of a computing power resource allocation status of the computing power management function. The computing power resource allocation status includes the identification information or the IP address information of the computing and storage resource node allocated by the computing power management function. The computing capability of the selected computing and storage resource node meets the computing resource requirement and the storage resource requirement in the computing power management policy.

Step 7: The SMF transmits a PDU session modification command to the AMF.

Step 8: The AMF transmits a PDU session modification command to the UE.

Step 9: The UE transmits a PDU session modification command ACK to the AMF.

Step 10: The AMF transmits a PDU session modification command ACK to the SMF.

Step 11: The PCF transmits a computing session modification response to the AF. The computing session modification response includes the identification information or the IP address information of the computing and storage resource node allocated by the computing power management function, and may further include QoE of the computing session that is assessed by the PCF and that can actually be achieved by the computing power management policy and/or the communication management policy.

It should be noted that, for implementations of the steps in this embodiment and related concepts, reference may be made to specific descriptions in the embodiments of FIG. 2 to FIG. 6, with the same technical effect in the foregoing embodiments achieved. Details are not described herein again.

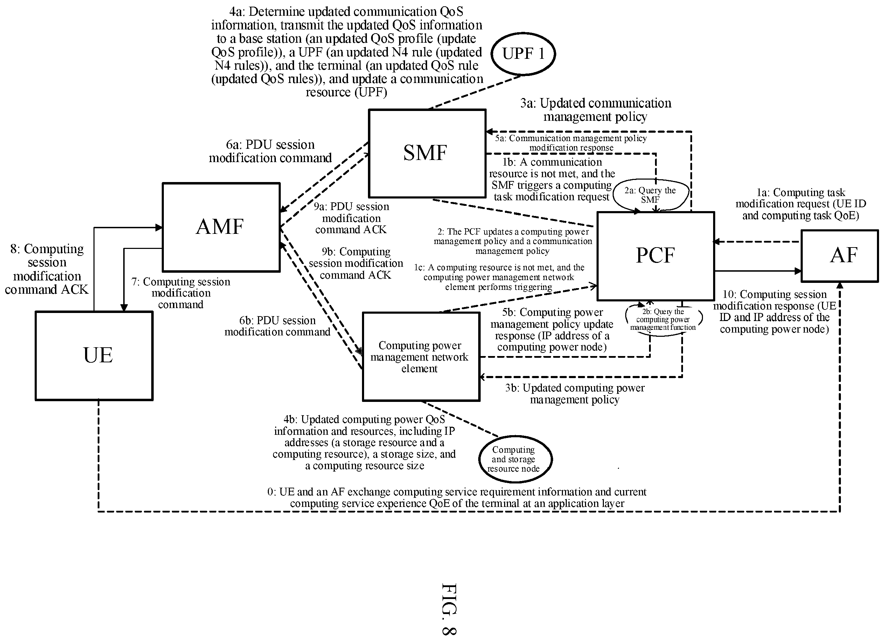

FIG. 8 is a seventh flowchart of a computing session update method according to an embodiment of this application. As shown in FIG. 8, the computing session update method includes the following specific steps.

Step 0: UE and an AF exchange computing service requirement information and current computing service experience QoE of the terminal at an application layer to obtain a computing service requirement that needs to be indicated to a network.

Step 1: A PCF obtains a second message, where the second message is used for requesting to update at least one of a communication management policy and a computing power management policy. The second message may include a terminal identifier, a computing service identifier, a PDU session identifier, a computing session identifier, a computing service requirement, and the like. For details, refer to the descriptions of the second message in the foregoing embodiments. Details are not described herein again. Optionally, step 1 may include any one of the following steps 1a to 1c.

Step 1a: The PCF obtains a second message transmitted by the AF.

Step 1b: The PCF obtains a second message transmitted by an SMF in a case that a communication resource of the SMF does not meet a preset communication resource, where the second message includes at least a policy update request indication and a communication QoS status notification.

Step 1c: The PCF obtains a second message transmitted by a computing power management function in a case that a computing power resource of the computing power management function does not meet a preset computing power resource, where the second message includes at least a policy update request indication and a computing power QoS status notification.

Step 2a: The PCF queries, based on the second message, for an SMF corresponding to a computing session. A trigger condition for this step is as follows: The PCF determines that a communication management policy currently corresponding to the UE cannot meet a computing service requirement of a request of the second message, in other words, the PCF determines that the communication management policy currently corresponding to the UE needs to be modified. A purpose of the step is to enable the PCF to initiate a subsequent communication management policy update process to the SMF. Specifically, the PCF may query, based on a context record of the PCF or from a UDM, for the SMF corresponding to the computing session of the UE.

Step 2b: The PCF queries, based on the second message, for a computing power management function corresponding to the computing session. A trigger condition for this step is as follows: The PCF determines that a computing power management policy currently corresponding to the UE cannot meet a computing service requirement of a request of the second message, in other words, the PCF determines that the computing power management policy currently corresponding to the UE needs to be modified. A purpose of the step is to enable the PCF to initiate a subsequent computing power management policy update process to the computing power management function. Specifically, the PCF may query, based on a context record of the PCF or from the UDM, for the computing power management function corresponding to the computing session of the UE.

Step 3a: The PCF transmits an updated communication management policy to the SMF to trigger the communication management policy update process of the SMF. The communication management policy update process of the SMF subsequently triggers the SMF to initiate a PDU session modification process to modify a specific QoS flow in a PDU session or create a QoS flow, so as to ensure that the QoS flow can adapt to a QoS requirement corresponding to the computing session.

Step 3b: The PCF transmits an updated computing power management policy to the computing power management function. For example, the PCF initiates a computing power modification request message to the computing power management function. The computing power modification request message includes the updated computing power management policy. The computing power modification request message may further include information that is related to the computing session and that is transmitted by the AF, for example, include a computing task type, a computing session identifier, and a computing service QoE requirement.

Step 4a: The SMF determines updated communication QoS information according to the obtained updated communication management policy, and transmits the updated communication QoS information to a base station-side device (an updated QoS profile), a UPF (an updated N4 interface rule), and the terminal (updated communication QoS). Specifically, the SMF triggers the PDU session modification process based on the communication management policy update process, for example, modifies a corresponding N4 interface rule, or establishes or modifies an N3 tunnel to trigger a QoS flow establishment or modification process.

Step 4b: The computing power management function determines updated computing power QoS information according to the obtained updated computing power management policy, and transmits the updated computing power QoS information to a computing and storage resource node. The computing power management function selects a corresponding computing and storage resource node based on the updated computing power QoS information. The selected computing and storage resource node has a computing function and a storage function. The two functions may be combined and deployed on one node, or may be separately deployed on different nodes. A computing capability of the selected computing and storage resource node meets a computing resource requirement and a storage resource requirement in the computing power management policy.

Step 5a: The SMF transmits a communication policy update response to the PCF to notify the PCF of whether the communication management policy in step 4a is successfully updated.

Step 5b: The computing power management function transmits a computing power policy update response to the PCF. The computing power policy update response includes identification information or IP address information of the computing and storage resource node allocated by the computing power management function. The identification information the computing and storage resource node is used for addressing the computing and storage resource node. Subsequently, the UE transmits uplink computing task data to the computing and storage resource node for computing. The IP address is used as a destination IP address for the UE to transmit the uplink computing task data, to ensure that the computing task data can be transmitted to the computing and storage resource node for computing.

Step 6a: The SMF transmits a PDU session modification command to the AMF.

Step 6b: The computing power management function transmits a computing power session modification command to the AMF.

Step 7: The AMF transmits a computing session modification command to the UE.

Step 8: The UE transmits a computing session modification command ACK to the AMF.

Step 9a: The AMF transmits a PDU session modification command ACK to the SMF.

Step 9b: The AMF transmits a computing session modification command ACK to the computing power management function.

Step 10: The PCF transmits a computing session modification response to the AF. The computing session modification response includes the identification information or the IP address information of the computing and storage resource node allocated by the computing power management function, and may further include QoE of the computing session that is assessed by the PCF and that can actually be achieved by the computing power management policy and/or the communication management policy.

It should be noted that, for implementations of the steps in this embodiment and related concepts, reference may be made to specific descriptions in the embodiments of FIG. 2 to FIG. 6, with the same technical effect in the foregoing embodiments achieved. Details are not described herein again.

It should be noted that the computing session update method provided in the embodiments of this application may be performed by a computing session update apparatus, or by a control module that is in the computing session update apparatus and that is configured to perform the computing session update method. In the embodiments of this application, a computing session update apparatus provided in the embodiments of this application is described by using an example in which the computing session update apparatus updates a computing session.

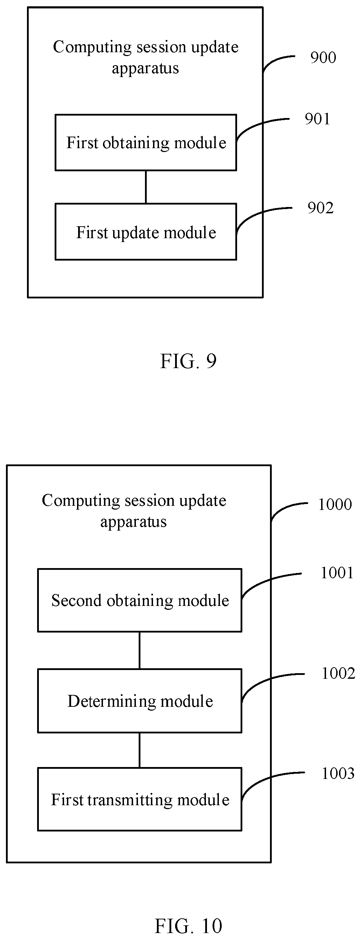

FIG. 9 is a first structural diagram of a computing session update apparatus according to an embodiment of this application. As shown in FIG. 9, the computing session update apparatus 900 includes:
a first obtaining module 901, configured to obtain a first message, where the apparatus includes at least one of a session management function SMF and a computing power management function, and the first message is used for requesting to update at least one of a communication resource and a computing power resource for a computing session; and
a first update module 902, configured to update at least one of the computing power resource and the communication resource for the computing session based on the first message.

Optionally, the first message includes at least one of the following:
a terminal identifier;
a protocol data unit PDU session identifier;
a computing session identifier;
an updated computing power management policy; and
an updated communication management policy.

Optionally, the computing power resource includes at least one of the following: a computing resource and a storage resource.

Optionally, the first obtaining module 901 is further configured to:
obtain a first message transmitted by a policy control function PCF.

Optionally, the first update module 902 is further configured to:
obtain at least one of an updated computing power management policy and an updated communication management policy based on the first message;
determine updated communication QoS information according to the obtained updated communication management policy, and update allocation of the communication resource for the computing session based on the determined updated communication QoS information in a case that the apparatus includes the SMF and has obtained the updated communication management policy; and
determine updated computing power QoS information according to the obtained updated computing power management policy, and update allocation of the computing power resource for the computing session based on the determined updated computing power QoS information in a case that the apparatus includes the computing power management function and has obtained the updated computing power management policy.

Optionally, the first update module 902 is further configured to:
determine the updated communication QoS information according to the obtained updated communication management policy; and
transmit an updated N4 interface rule to a user plane function UPF, to enable the UPF to update the communication resource for the computing session according to the updated N4 interface rule, where the updated N4 interface rule is obtained based on the updated communication QoS information.

Optionally, the first update module 902 is further configured to:
determine the updated computing power QoS information according to the obtained updated computing power management policy; and
transmit the updated computing power QoS information to a computing and storage resource node, to enable the computing and storage resource node to update the computing power resource for the computing session based on the updated computing power QoS information.

Optionally, the first obtaining module 901 is further configured to:
receive a feedback message transmitted by the computing and storage resource node, where the feedback message includes at least one of the following: a computing resource internet protocol IP address, a storage resource IP address, a computing resource size, and a storage resource size.

Optionally, the computing power QoS information includes at least one of the following: computing power, a sample data volume, a storage resource, a computing delay, a computing accuracy rate, and a computing speed.

Optionally, the apparatus is further configured to:
transmit, to the PCF, a third message used for responding to the first message.

Optionally, the apparatus is further configured to:
transmit a fourth message to a terminal through an access and mobility management function AMF, where the fourth message is used to indicate at least one of an updated computing power resource and an updated communication resource that are allocated by the apparatus.

Optionally, the apparatus is further configured to perform any one of the following operations:
in a case that the apparatus includes the SMF, transmitting a first notification message to the AMF, so that the AMF transmits the fourth message to the terminal based on the first notification message;
in a case that the apparatus includes the computing power management function, transmitting a second notification message to the AMF, so that the AMF transmits the fourth message to the terminal based on the second notification message;
in a case that the apparatus includes the SMF, notifying, by the computing power management function, the SMF of a computing power resource allocation status of the computing power management function, and transmitting, by the apparatus, a third notification message to the AMF, so that the AMF transmits the fourth message to the terminal based on the third notification message; and
in a case that the apparatus includes the computing power management function, notifying, by the SMF, the computing power management function of a communication resource allocation status of the SMF, and transmitting, by the apparatus, a fourth notification message to the AMF, so that the AMF transmits the fourth message to the terminal based on the fourth notification message.

Optionally, the first obtaining module 901 is further configured to:
receive a fifth message transmitted by the AMF, where the fifth message is used for responding to at least one of the first notification message, the second notification message, the third notification message, and the fourth notification message.

It should be noted that the computing session update apparatus 900 provided in this embodiment of this application is capable of implementing the processes implemented by the first function in the method embodiment of FIG. 2, with the same technical effect achieved. To avoid repetition, details are not described herein again.

FIG. 10 is a second structural diagram of a computing session update apparatus according to an embodiment of this application. As shown in FIG. 10, the computing session update apparatus 1000 includes:
a second obtaining module 1001, configured to obtain a second message, where the second message is used for requesting to update at least one of a communication management policy and a computing power management policy;
a determining module 1002, configured to determine at least one of an updated communication management policy and an updated computing power management policy based on the second message; and
a first transmitting module 1003, configured to transmit a first message to a first function according to at least one of the updated communication management policy and the updated computing power management policy, where
the first function includes at least one of a session management function SMF and a computing power management function, and the first message is used for requesting to update at least one of a communication resource and a computing power resource for a computing session.

Optionally, the second obtaining module 1001 is configured to perform any one of the following operations:
obtaining a second message transmitted by an application function AF;
obtaining a second message transmitted by the SMF in a case that a communication resource of the SMF does not meet a preset communication resource; and
obtaining a second message transmitted by the computing power management function in a case that a computing power resource of the computing power management function does not meet a preset computing power resource.

Optionally, in a case that the apparatus obtains the second message transmitted by the SMF or in a case that the apparatus obtains the second message transmitted by the computing power management function, the second message includes at least one of the following:
a policy update request indication;
a communication QoS status notification; and
a computing power QoS status notification.

Optionally, the determining module 1002 is further configured to:
determine, based on the second message, the first function corresponding to the computing session.

Optionally, the second obtaining module 1001 is further configured to:
receive a third message that is transmitted by the first function and that is used for responding to the first message.

Optionally, the second message includes at least one of the following:
a terminal identifier;
a computing service identifier;
a protocol data unit PDU session identifier;
a computing session identifier;
a computing service requirement;
a computing service quality of experience QoE requirement;
a data network name DNN; and
single network slice selection assistance information S-NSSAI.

Optionally, the computing service requirement includes at least one of the following: delay information of the computing service, an accuracy rate of the computing service, a computing volume of the computing service, a storage requirement, a type of the computing service, and an IP address of the computing service.

Optionally, the computing power resource includes at least one of the following: a computing resource and a storage resource.

Optionally, the first message includes at least one of the following:
a terminal identifier;
a protocol data unit PDU session identifier;
a computing session identifier;
an updated computing power management policy; and
an updated communication management policy.

It should be noted that the computing session update apparatus 1000 provided in this embodiment of this application is capable of implementing the processes implemented by the PCF in the method embodiment of FIG. 3, with the same technical effect achieved. To avoid repetition, details are not described herein again.

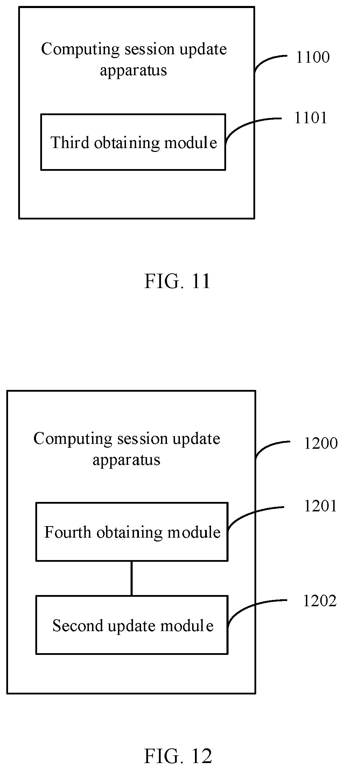

FIG. 11 is a third structural diagram of a computing session update apparatus according to an embodiment of this application. As shown in FIG. 11, the computing session update apparatus 1100 includes:
a third obtaining module 1101, configured to obtain a notification message transmitted by a first function, where
the first function includes at least one of a session management function SMF and a computing power management function, and the notification message is triggered after the first function updates at least one of a computing power resource and a communication resource for a computing session based on a first message.

Optionally, the notification message includes at least one of the following: a protocol data unit PDU session identifier, a computing session identifier, communication resource update information, a communication quality of service QoS rule, computing power resource update information, and a computing power QoS rule.

Optionally, the apparatus is further configured to perform at least one of the following operations:
transmitting a fourth message to a terminal based on the notification message, where the fourth message is used to indicate at least one of a computing power resource and a communication resource that are updated by the first function for the computing session; and
transmitting a sixth message to a base station-side device based on the notification message, where the sixth message is used to indicate the communication resource updated by the first function for the computing session.

Optionally, the apparatus is further configured to:
receive a seventh message that is transmitted by the terminal and that is used for responding to the fourth message; and
transmit a fifth message to the first function based on the seventh message, where the fifth message is used for responding to the notification message.

Optionally, the fourth message includes at least one of the following: a PDU session identifier, a computing session identifier, communication resource update information, a communication QoS rule, computing power resource update information, and a computing power QoS rule.

Optionally, the computing power resource update information includes at least one of the following: a computing resource internet protocol IP address, a storage resource IP address, a computing resource size, and a storage resource size.

It should be noted that the computing session update apparatus 1100 provided in this embodiment of this application is capable of implementing the processes implemented by the AMF in the method embodiment of FIG. 4, with the same technical effect achieved. To avoid repetition, details are not described herein again.

FIG. 12 is a fourth structural diagram of a computing session update apparatus according to an embodiment of this application. As shown in FIG. 12, the computing session update apparatus 1200 includes:
a fourth obtaining module 1201, configured to obtain updated computing power QoS information transmitted by a first function; and
a second update module 1202, configured to update a computing power resource for a computing session based on the updated computing power QoS information, where
the first function includes at least one of a session management function SMF and a computing power management function, the updated computing power QoS information is determined by the first function according to an updated computing power management policy obtained by the first function based on a first message, and the first message is used for requesting to update at least one of a communication resource and the computing power resource for the computing session.

Optionally, the apparatus is further configured to:
transmit a feedback message to the first function, where the feedback message includes at least one of the following: a computing resource internet protocol IP address, a storage resource IP address, a computing resource size, and a storage resource size.

It should be noted that the computing session update apparatus 1200 provided in this embodiment of this application is capable of implementing the processes implemented by the computing and storage resource node in the method embodiment of FIG. 5, with the same technical effect achieved. To avoid repetition, details are not described herein again.

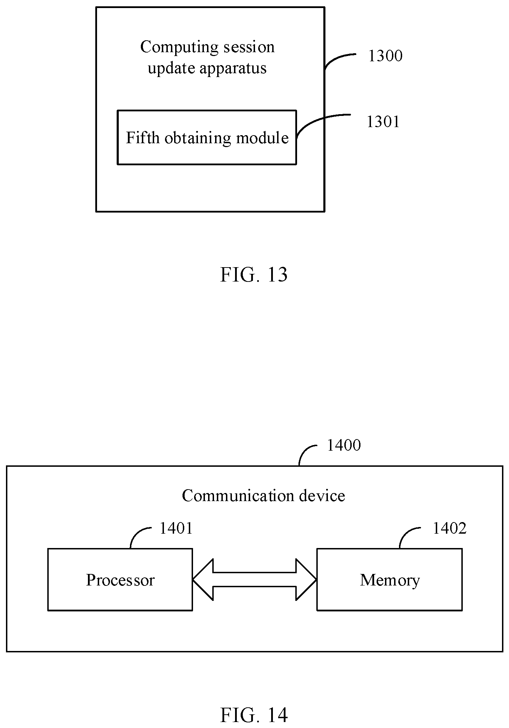

FIG. 13 is a fifth structural diagram of a computing session update apparatus according to an embodiment of this application. As shown in FIG. 13, the computing session update apparatus 1300 includes:
a fifth obtaining module 1301, configured to obtain a fourth message transmitted by an access and mobility management function AMF, where the fourth message is used to indicate at least one of a computing power resource and a communication resource that are updated by a first function for a computing session, and the first function includes at least one of a session management function SMF and a computing power management function.

Optionally, the fourth message includes at least one of the following: a protocol data unit PDU session identifier, a computing session identifier, communication resource update information, a communication quality of service QoS rule, computing power resource update information, and a computing power QoS rule.

Optionally, the computing power resource update information includes at least one of the following: a computing resource internet protocol IP address, a storage resource IP address, a computing resource size, and a storage resource size.

Optionally, the apparatus is further configured to:
transmit, to the AMF, a seventh message used for responding to the fourth message.

It should be noted that the computing session update apparatus 1300 provided in this embodiment of this application is capable of implementing the processes implemented by the terminal in the method embodiment of FIG. 6, with the same technical effect achieved. To avoid repetition, details are not described herein again.

The computing session update apparatus in the embodiments of this application may be an apparatus, or an apparatus or an electronic device with an operating system, or may be a component, an integrated circuit, or a chip in a terminal. The apparatus or the electronic device may be a mobile terminal or a non-mobile terminal. For example, the mobile terminal may include but is not limited to the aforementioned types of terminals, and the non-mobile terminal may be a server, a network attached storage (Network Attached Storage, NAS), a personal computer (personal computer, PC), a television (television, TV), a teller machine, a self-service machine, or the like. This is not specifically limited in the embodiments of this application.

Optionally, as shown in FIG. 14, an embodiment of this application further provides a communication device 1400, including a processor 1401, a memory 1402, and a program or instructions stored in the memory 1402 and capable of running on the processor 1401. For example, when the communication device 1400 is a network function entity, and when the program or instructions are executed by the processor 1401, the processes of the method embodiment of FIG. 2 are implemented, or the processes of the method embodiment of FIG. 3 are implemented, or the processes of the method embodiment of FIG. 4 are implemented, or the processes of the method embodiment of FIG. 5 are implemented, with the same technical effect achieved. When the communication device 1400 is a terminal, and when the program or instructions are executed by the processor 1401, the processes of the method embodiment of FIG. 6 are implemented, with the same technical effect achieved. To avoid repetition, details are not described herein again.

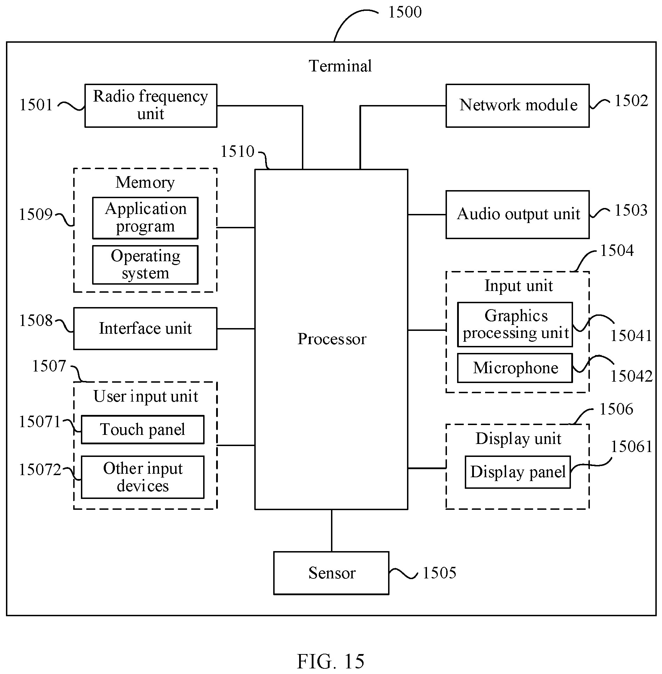

An embodiment of this application further provides a terminal, including a processor and a communication interface. The communication interface is configured to obtain a fourth message transmitted by an AMF. The terminal embodiment corresponds to the foregoing terminal-side method embodiment, and all implementation processes and implementations of the foregoing method embodiment are applicable to the terminal embodiment, with the same technical effect achieved. Specifically, FIG. 15 is a schematic diagram of a hardware structure of a terminal for implementing an embodiment of this application.

The terminal 1500 includes but is not limited to at least some of components such as a radio frequency unit 1501, a network module 1502, an audio output unit 1503, an input unit 1504, a sensor 1505, a display unit 1506, a user input unit 1507, an interface unit 1508, a memory 1509, and a processor 1510.

Persons skilled in the art can understand that the terminal 1500 may further include a power supply (for example, a battery) that supplies power to each component. The power supply may be logically connected to the processor 1510 by using a power management system, to implement functions such as charging management, discharging management, and power consumption management by using the power management system. The terminal structure shown in FIG. 15 does not constitute a limitation on the terminal. The terminal may include more or fewer components than those shown in the figure, or some components may be combined, or there may be a different component layout. Details are not described herein again.

It should be understood that, in this embodiment of this application, the input unit 1504 may include a graphics processing unit (Graphics Processing Unit, GPU) 15041 and a microphone 15042. The graphics processing unit 15041 processes image data of a static picture or a video that is obtained by an image capture apparatus (for example, a camera) in a video capture mode or an image capture mode. The display unit 1506 may include a display panel 15061. The display panel 15061 may be configured in a form of a liquid crystal display, an organic light-emitting diode, or the like. The user input unit 1507 includes a touch panel 15071 and other input devices 15072. The touch panel 15071 is also referred to as a touchscreen. The touch panel 15071 may include two parts: a touch detection apparatus and a touch controller. The other input devices 15072 may include but are not limited to a physical keyboard, a function key (such as a volume control key or an on/off key), a trackball, a mouse, and a joystick. Details are not described herein.

In this embodiment of this application, the radio frequency unit 1501 receives downlink data from a network-side device and then transmits the downlink data to the processor 1510 for processing; and transmits uplink data to the network-side device. Usually, the radio frequency unit 1501 includes but is not limited to an antenna, at least one amplifier, a transceiver, a coupler, a low noise amplifier, a duplexer, and the like.

The memory 1509 may be configured to store software programs or instructions and various data. The memory 1509 may mainly include a program or instruction storage region and a data storage region. The program or instruction storage region may store an operating system, an application program or instructions required by at least one function (for example, an audio play function or an image play function), and the like. In addition, the memory 1509 may include a high-speed random access memory, or may include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash memory, or another non-volatile solid-state storage device.

The processor 1510 may include one or more processing units. Optionally, the processor 1510 may integrate an application processor and a modem processor. The application processor mainly processes an operating system, a user interface, an application program or instructions, and the like. The modem processor mainly processes wireless communication, for example, a baseband processor. It can be understood that the modem processor may alternatively be not integrated in the processor 1510.

The radio frequency unit 1501 is configured to obtain a fourth message transmitted by an AMF, where the fourth message is used to indicate at least one of a computing power resource and a communication resource that are updated by a first function for a computing session, and the first function includes at least one of a session management function SMF and a computing power management function.

Optionally, the fourth message includes at least one of the following: a protocol data unit PDU session identifier, a computing session identifier, communication resource update information, a communication quality of service QoS rule, computing power resource update information, and a computing power QoS rule.

Optionally, the computing power resource update information includes at least one of the following: a computing resource internet protocol IP address, a storage resource IP address, a computing resource size, and a storage resource size.

Optionally, the radio frequency unit 1501 is further configured to transmit, to the AMF, a seventh message used for responding to the fourth message.

In this embodiment of this application, the terminal can learn of the updated computing power resource and/or the updated communication resource for the computing session based on the fourth message transmitted by the AMF, data, related to the computing session, of the terminal can be transmitted to a computing and storage resource node, and the computing and storage resource node performs computing and feeds back a computing result. In this way, in a case that the terminal has a weak computing capability, the terminal can still complete a corresponding computing task, thereby reducing costs and power consumption of the terminal.

An embodiment of this application further provides a readable storage medium. The readable storage medium stores a program or instructions. When the program or instructions are executed by a processor, the processes of the method embodiment of FIG. 2 are implemented, or the processes of the method embodiment of FIG. 3 are implemented, or the processes of the method embodiment of FIG. 4 are implemented, or the processes of the method embodiment of FIG. 5 are implemented, or the processes of the method embodiment of FIG. 6 are implemented, with the same technical effect achieved. To avoid repetition, details are not described herein again.

The processor is a processor in the terminal in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions, to implement the processes of the method embodiment of FIG. 2, or implement the processes of the method embodiment of FIG. 3, or implement the processes of the method embodiment of FIG. 4, or implement the processes of the method embodiment of FIG. 5, or implement the processes of the method embodiment of FIG. 6, with the same technical effect achieved. To avoid repetition, details are not described herein again.

It should be understood that the chip provided in the embodiments of this application may also be referred to as a system-level chip, a system on chip, a chip system, a system-on-a-chip, or the like.

An embodiment of this application further provides a communication network function entity, including a processor, a memory, and a program or instructions stored in the memory and capable of running on the processor. When the program or instructions are executed by the processor, the processes of the method embodiment of FIG. 2 are implemented, or the processes of the method embodiment of FIG. 3 are implemented, or the processes of the method embodiment of FIG. 4 are implemented, or the processes of the method embodiment of FIG. 5 are implemented, with the same technical effect achieved. To avoid repetition, details are not described herein again. It should be noted that, in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a ..." does not preclude the existence of other identical elements in the process, method, article, or apparatus that includes the element. In addition, it should be noted that the scope of the methods and apparatuses in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing descriptions of the implementations, persons skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the conventional technology may be implemented in a form of a computer software product. The computer software product may be stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in the embodiments of this application.

## Claims

1. A computing session update method, comprising:
obtaining (201), by a first function, a first message, wherein the first function comprises at least one of a session management function, SMF, and a computing power management function, and the first message is used for requesting to update at least one of a communication resource and a computing power resource for a computing session; and
updating (202), by the first function, at least one of the computing power resource and the communication resource for the computing session based on the first message; **characterized in that**
the computing power management function is a network element for managing and controlling a computing and storage resource node, and the computing session is a session that comprises both a communication resource and a computing power resource and that is established to meet a computing service requirement of a user.

2. The method according to claim 1, wherein the first message comprises at least one of the following:
a terminal identifier;
a protocol data unit, PDU, session identifier;
a computing session identifier;
an updated computing power management policy; and
an updated communication management policy;
wherein the computing power resource comprises at least one of the following: a computing resource and a storage resource.

3. The method according to claim 1, wherein the obtaining (201), by a first function, a first message comprises:
obtaining, by the first function, a first message transmitted by a policy control function, PCF;
wherein the updating (202), by the first function, at least one of the computing power resource and the communication resource for the computing session based on the first message comprises:
obtaining, by the first function, at least one of an updated computing power management policy and an updated communication management policy based on the first message;
determining, by the first function, updated communication QoS information according to the obtained updated communication management policy, and updating allocation of the communication resource for the computing session based on the determined updated communication QoS information in a case that the first function comprises the SMF and has obtained the updated communication management policy; and
determining, by the first function, updated computing power QoS information according to the obtained updated computing power management policy, and updating allocation of the computing power resource for the computing session based on the determined updated computing power QoS information in a case that the first function comprises the computing power management function and has obtained the updated computing power management policy.

4. The method according to claim 3, wherein the updating allocation of the communication resource for the computing session based on the determined updated communication QoS information comprises:
transmitting, by the first function, an updated N4 interface rule to a user plane function, UPF, to enable the UPF to update the communication resource for the computing session according to the updated N4 interface rule, wherein the updated N4 interface rule is obtained based on the updated communication QoS information; or,
wherein the updating allocation of the computing power resource for the computing session based on the determined updated computing power QoS information comprises:
transmitting, by the first function, the updated computing power QoS information to a computing and storage resource node, to enable the computing and storage resource node to update the computing power resource for the computing session based on the updated computing power QoS information.

5. The method according to claim 4, wherein after the transmitting, by the first function, the updated computing power QoS information to a computing and storage resource node, the method further comprises:
receiving, by the first function, a feedback message transmitted by the computing and storage resource node, wherein the feedback message comprises at least one of the following: a computing resource internet protocol, IP, address, a storage resource IP address, a computing resource size, and a storage resource size.

6. The method according to claim 1, wherein after the updating (202), by the first function, at least one of the computing power resource and the communication resource for the computing session based on the first message, the method further comprises:
transmitting, by the first function to a PCF, a third message used for responding to the first message;
wherein after the updating (202), by the first function, at least one of the computing power resource and the communication resource for the computing session based on the first message, the method further comprises:
transmitting, by the first function, a fourth message to a terminal through an access and mobility management function, AMF, wherein the fourth message is used to indicate at least one of an updated computing power resource and an updated communication resource that are allocated by the first function;
wherein the transmitting, by the first function, a fourth message to a terminal through an AMF comprises any one of the following:
in a case that the first function comprises the SMF, transmitting, by the first function, a first notification message to the AMF, so that the AMF transmits the fourth message to the terminal based on the first notification message;
in a case that the first function comprises the computing power management function, transmitting, by the first function, a second notification message to the AMF, so that the AMF transmits the fourth message to the terminal based on the second notification message;
in a case that the first function comprises the SMF, receiving, by the SMF, a computing power resource allocation status of the computing power management function from the computing power management function side, and transmitting a third notification message to the AMF, so that the AMF transmits the fourth message to the terminal based on the third notification message; and
in a case that the first function comprises the computing power management function, receiving, by the computing power management function, a communication resource allocation status of the SMF from the SMF side, and transmitting a fourth notification message to the AMF, so that the AMF transmits the fourth message to the terminal based on the fourth notification message.

7. A computing session update method, comprising:
obtaining (301), by a policy control function, PCF, a second message, wherein the second message is used for requesting to update at least one of a communication management policy and a computing power management policy;
determining (302), by the PCF, at least one of an updated communication management policy and an updated computing power management policy based on the second message; and
transmitting (303), by the PCF, a first message to a first function according to at least one of the updated communication management policy and the updated computing power management policy, wherein
the first function comprises at least one of a session management function, SMF, and a computing power management function, and the first message is used for requesting to update at least one of a communication resource and a computing power resource for a computing session; **characterized in that**
the computing power management function is a network element for managing and controlling a computing and storage resource node, and the computing session is a session that comprises both a communication resource and a computing power resource and that is established to meet a computing service requirement of a user.

8. The method according to claim 7, wherein the obtaining (301), by a PCF, a second message comprises any one of the following:
obtaining, by the PCF, a second message transmitted by an application function AF;
obtaining, by the PCF, a second message transmitted by the SMF in a case that a communication resource of the SMF does not meet a preset communication resource; and
obtaining, by the PCF, a second message transmitted by the computing power management function in a case that a computing power resource of the computing power management function does not meet a preset computing power resource.

9. The method according to claim 8, wherein in a case that the PCF obtains the second message transmitted by the SMF or in a case that the PCF obtains the second message transmitted by the computing power management function, the second message comprises at least one of the following:
a policy update request indication;
a communication QoS status notification; and
a computing power QoS status notification.

10. The method according to claim 7, wherein before the transmitting, by the PCF, a first message to a first function according to at least one of the updated communication management policy and the updated computing power management policy, the method further comprises:
determining, by the PCF based on the second message, the first function corresponding to the computing session;
wherein after the transmitting (303), by the PCF, a first message to a first function according to at least one of the updated communication management policy and the updated computing power management policy, the method further comprises:
receiving, by the PCF, a third message that is transmitted by the first function and that is used for responding to the first message.

11. The method according to claim 7, wherein the second message comprises at least one of the following:
a terminal identifier;
a computing service identifier;
a protocol data unit, PDU, session identifier;
a computing session identifier;
a computing service requirement;
a computing service quality of experience, QoE, requirement;
a data network name, DNN; and
single network slice selection assistance information, S-NSSAI;
wherein the computing service requirement comprises at least one of the following: delay information of the computing service, an accuracy rate of the computing service, a computing volume of the computing service, a storage requirement, a type of the computing service, and an IP address of the computing service;
wherein the computing power resource comprises at least one of the following: a computing resource and a storage resource;
wherein the first message comprises at least one of the following:
a terminal identifier;
a protocol data unit, PDU, session identifier;
a computing session identifier;
an updated computing power management policy; and
an updated communication management policy.

12. A computing session update method, comprising:
obtaining (401), by an access and mobility management function, AMF, a notification message transmitted by a first function, wherein
the first function comprises at least one of a session management function, SMF, and a computing power management function, and the notification message is triggered after the first function updates at least one of a computing power resource and a communication resource for a computing session based on a first message; **characterized in that**
the computing power management function is a network element for managing and controlling a computing and storage resource node, and the computing session is a session that comprises both a communication resource and a computing power resource and that is established to meet a computing service requirement of a user.

13. The method according to claim 12, wherein after the obtaining (401), by an AMF, a notification message transmitted by a first function, the method further comprises at least one of the following:
transmitting, by the AMF, a fourth message to a terminal based on the notification message, wherein the fourth message is used to indicate at least one of a computing power resource and a communication resource that are updated by the first function for the computing session; and
transmitting, by the AMF, a sixth message to a base station-side device based on the notification message, wherein the sixth message is used to indicate the communication resource updated by the first function for the computing session.

14. The method according to claim 13, wherein after the transmitting, by the AMF, a fourth message to a terminal based on the notification message, the method further comprises:
receiving, by the AMF, a seventh message that is transmitted by the terminal and that is used for responding to the fourth message; and
transmitting, by the AMF, a fifth message to the first function based on the seventh message, wherein the fifth message is used for responding to the notification message;
wherein the fourth message comprises at least one of the following: a PDU session identifier, a computing session identifier, communication resource update information, a communication QoS rule, computing power resource update information, and a computing power QoS rule;
wherein the computing power resource update information comprises at least one of the following: a computing resource internet protocol, IP, address, a storage resource IP address, a computing resource size, and a storage resource size.

15. A network function entity, comprising a processor, a memory, and a program or instructions stored in the memory and capable of running on the processor, **characterized in that** when the program or instructions are executed by the processor, the steps of the computing session update method according to any one of claims 1 to 6 are implemented, or the steps of the computing session update method according to any one of claims 7 to 11 are implemented, or the steps of the computing session update method according to any one of claims 12 to 14 are implemented.

## Patentansprüche

1. Verfahren zur Aktualisierung einer Rechensitzung, umfassend:
Erhalten (201) einer ersten Nachricht durch eine erste Funktion, wobei die erste Funktion mindestens entweder eine Sitzungsverwaltungsfunktion, SMF, und/oder eine Rechenleistungsverwaltungsfunktion umfasst und die erste Nachricht verwendet wird, um die Aktualisierung von mindestens entweder einer Kommunikationsressource und/oder einer Rechenleistungsressource für eine Rechensitzung anzufordern; und
Aktualisieren (202) mindestens entweder der Rechenleistungsressource und/oder der Kommunikationsressource für die Rechensitzung durch die erste Funktion basierend auf der ersten Nachricht, **dadurch gekennzeichnet, dass**
die Rechenleistungsverwaltungsfunktion ein Netzwerkelement zum Verwalten und Steuern eines Rechen- und Speicherressourcenknotens ist und die Rechensitzung eine Sitzung ist, die sowohl eine Kommunikationsressource als auch eine Rechenleistungsressource umfasst und die hergestellt wird, um einem Rechendiensterfordernis eines Benutzers zu genügen.

2. Verfahren nach Anspruch 1, wobei die erste Nachricht mindestens eine der folgenden Angaben umfasst:
eine Endgerätekennung;
eine Protokolldateneinheits(PDU)-Sitzungskennung;
eine Rechensitzungskennung;
einen aktualisierten Rechenleistungsverwaltungsregelsatz; und
einen aktualisierten Kommunikationsverwaltungsregelsatz,
wobei die Rechenleistungsressource mindestens eine der folgenden Ressourcen umfasst: eine Rechenressource und eine Speicherressource.

3. Verfahren nach Anspruch 1, wobei das Erhalten (201) einer ersten Nachricht durch eine erste Funktion Folgendes umfasst:
Erhalten einer durch eine Regelsatzsteuerungsfunktion, PCF, übertragenen ersten Nachricht durch die erste Funktion,
wobei das Aktualisieren (202) mindestens entweder der Rechenleistungsressource und/oder der Kommunikationsressource für die Rechensitzung durch die erste Funktion basierend auf der ersten Nachricht Folgendes umfasst:
Erhalten mindestens entweder eines aktualisierten Rechenleistungsverwaltungsregelsatzes und/oder und eines aktualisierten Kommunikationsverwaltungsregelsatzes durch die erste Funktion basierend auf der ersten Nachricht;
Bestimmen aktualisierter Kommunikations-QoS-Informationen gemäß dem erhaltenen aktualisierten Kommunikationsverwaltungsregelsatz durch die erste Funktion und Aktualisieren einer Zuweisung der Kommunikationsressource für die Rechensitzung basierend auf den bestimmten aktualisierten Kommunikations-QoS-Informationen, sofern die erste Funktion die SMF umfasst und den aktualisierten Kommunikationsverwaltungsregelsatz erhalten hat; und
Bestimmen aktualisierter Rechenleistungs-QoS-Informationen gemäß dem erhaltenen aktualisierten Rechenleistungsverwaltungsregelsatz durch die erste Funktion und Aktualisieren einer Zuweisung der Rechenleistungsressource für die Rechensitzung basierend auf den bestimmten aktualisierten Rechenleistungs-QoS-Informationen, sofern die erste Funktion die Rechenleistungsverwaltungsfunktion umfasst und den aktualisierten Rechenleistungsverwaltungsregelsatz erhalten hat.

4. Verfahren nach Anspruch 3, wobei das Aktualisieren einer Zuweisung der Kommunikationsressource für die Rechensitzung basierend auf den bestimmten aktualisierten Kommunikations-QoS-Informationen Folgendes umfasst:
Übertragen einer aktualisierten N4-Schnittstellenregel durch die erste Funktion an eine Benutzerebenenfunktion, UPF, um der UPF zu ermöglichen, die Kommunikationsressource für die Rechensitzung gemäß der aktualisierten N4-Schnittstellenregel zu aktualisieren, wobei die aktualisierte N4-Schnittstellenregel basierend auf den aktualisierten Kommunikations-QoS-Informationen erhalten wird, oder
wobei das Aktualisieren einer Zuweisung der Rechenleistungsressource für die Rechensitzung basierend auf den bestimmten aktualisierten Rechenleistungs-QoS-Informationen Folgendes umfasst:
Übertragen der aktualisierten Rechenleistungs-QoS-Informationen durch die erste Funktion an einen Rechen- und Speicherressourcenknoten, um dem Rechen- und Speicherressourcenknoten zu ermöglichen, die Rechenleistungsressource für die Rechensitzung basierend auf den aktualisierten Rechenleistungs-QoS-Informationen zu aktualisieren.

5. Verfahren nach Anspruch 4, wobei das Verfahren nach dem Übertragen der aktualisierten Rechenleistungs-QoS-Informationen durch die erste Funktion an einen Rechen- und Speicherressourcenknoten ferner Folgendes umfasst:
Empfangen einer durch den Rechen- und Speicherressourcenknoten übertragenen Rückmeldungsnachricht durch die erste Funktion, wobei die Rückmeldungsnachricht mindestens eine der folgenden Angaben umfasst: eine Rechenressourcen-Internetprotokoll(IP)-Adresse, eine Speicherressourcen-IP-Adresse, eine Rechenressourcengröße und eine Speicherressourcengröße.

6. Verfahren nach Anspruch 1, wobei das Verfahren nach dem Aktualisieren (202) mindestens entweder der Rechenleistungsressource und/oder der Kommunikationsressource für die Rechensitzung durch die erste Funktion basierend auf der ersten Nachricht ferner Folgendes umfasst:
Übertragen einer dritten Nachricht, die zum Antworten auf die erste Nachricht verwendet wird, durch die erste Funktion an eine PCF,
wobei das Verfahren nach dem Aktualisieren (202) mindestens entweder der Rechenleistungsressource und/oder der Kommunikationsressource für die Rechensitzung durch die erste Funktion basierend auf der ersten Nachricht ferner Folgendes umfasst:
Übertragen einer vierten Nachricht durch die erste Funktion an ein Endgerät mittels einer Zugriffs- und Mobilitätsverwaltungsfunktion, AMF, wobei die vierte Nachricht verwendet wird, um mindestens entweder eine aktualisierte Rechenleistungsressource und/oder eine aktualisierte Kommunikationsressource anzugeben, die durch die erste Funktion zugewiesen sind,
wobei das Übertragen einer vierten Nachricht durch die erste Funktion an ein Endgerät mittels einer AMF einen beliebigen der folgenden Vorgänge umfasst:
sofern die erste Funktion die SMF umfasst, Übertragen einer ersten Benachrichtigungsnachricht durch die erste Funktion an die AMF, sodass die AMF die vierte Nachricht an das Endgerät basierend auf der ersten Benachrichtigungsnachricht überträgt;
sofern die erste Funktion die Rechenleistungsverwaltungsfunktion umfasst, Übertragen einer zweiten Benachrichtigungsnachricht durch die erste Funktion an die AMF, sodass die AMF die vierte Nachricht an das Endgerät basierend auf der zweiten Benachrichtigungsnachricht überträgt;
sofern die erste Funktion die SMF umfasst, Empfangen eines Rechenleistungsressourcenzuweisungsstatus der Rechenleistungsverwaltungsfunktion von der Seite der Rechenleistungsverwaltungsfunktion durch die SMF und Übertragen einer dritten Benachrichtigungsnachricht an die AMF, sodass die AMF die vierte Nachricht an das Endgerät basierend auf der dritten Benachrichtigungsnachricht überträgt, und
sofern die erste Funktion die Rechenleistungsverwaltungsfunktion umfasst, Empfangen eines Kommunikationsressourcenzuweisungsstatus der SMF von der SMF-Seite durch die Rechenleistungsverwaltungsfunktion und Übertragen einer vierten Benachrichtigungsnachricht an die AMF, sodass die AMF die vierte Nachricht an das Endgerät basierend auf der vierten Benachrichtigungsnachricht überträgt.

7. Verfahren zur Aktualisierung einer Rechensitzung, umfassend:
Erhalten (301) einer zweiten Nachricht durch eine Regelsatzsteuerungsfunktion, PCF, wobei die zweite Nachricht verwendet wird, um die Aktualisierung mindestens entweder eines Kommunikationsverwaltungsregelsatzes und/oder eines Rechenleistungsverwaltungsregelsatzes anzufordern;
Bestimmen (302) mindestens entweder eines aktualisierten Kommunikationsverwaltungsregelsatzes und/oder eines aktualisierten Rechenleistungsverwaltungsregelsatzes durch die PCF basierend auf der zweiten Nachricht; und
Übertragen (303) einer ersten Nachricht durch die PCF an eine erste Funktion gemäß mindestens entweder dem aktualisierten Kommunikationsverwaltungsregelsatz und/oder dem aktualisierten Rechenleistungsverwaltungsregelsatz, wobei
die erste Funktion mindestens entweder eine Sitzungsverwaltungsfunktion, SMF, und/oder eine Rechenleistungsverwaltungsfunktion umfasst und die erste Nachricht verwendet wird, um die Aktualisierung mindestens entweder einer Kommunikationsressource und/oder einer Rechenleistungsressource für eine Rechensitzung anzufordern, **dadurch gekennzeichnet, dass** die Rechenleistungsverwaltungsfunktion ein Netzwerkelement zum Verwalten und Steuern eines Rechen- und Speicherressourcenknotens ist und die Rechensitzung eine Sitzung ist, die sowohl eine Kommunikationsressource als auch eine Rechenleistungsressource umfasst und die hergestellt wird, um einem Rechendiensterfordernis eines Benutzers zu genügen.

8. Verfahren nach Anspruch 7, wobei das Erhalten (301) einer zweiten Nachricht durch eine PCF einen der folgenden Vorgänge umfasst:
Erhalten einer durch eine Anwendungsfunktion, AF, übertragenen zweiten Nachricht durch die PCF;
Erhalten einer durch die SMF übertragenen zweiten Nachricht durch die PCF, sofern eine Kommunikationsressource der SMF einer vorgegebenen Kommunikationsressource nicht genügt; und
Erhalten einer durch die Rechenleistungsverwaltungsfunktion übertragenen zweiten Nachricht durch die PCF, sofern eine Rechenleistungsressource der Rechenleistungsverwaltungsfunktion einer vorgegebenen Rechenleistungsressource nicht genügt.

9. Verfahren nach Anspruch 8, wobei die zweite Nachricht, sofern die PCF die durch die SMF übertragene zweite Nachricht erhält oder sofern die PCF die durch die Rechenleistungsverwaltungsfunktion übertragene zweite Nachricht erhält, mindestens eine der folgenden Angaben umfasst:
eine Regelsatzaktualisierungsanforderungsangabe;
eine Kommunikations-QoS-Statusbenachrichtigung; und
eine Rechenleistungs-QoS-Statusbenachrichtigung.

10. Verfahren nach Anspruch 7, wobei das Verfahren vor dem Übertragen einer ersten Nachricht durch die PCF an eine erste Funktion gemäß mindestens entweder dem aktualisierten Kommunikationsverwaltungsregelsatz und/oder dem aktualisierten Rechenleistungsverwaltungsregelsatz ferner Folgendes umfasst:
Bestimmen, dass die erste Funktion der Rechensitzung entspricht, durch die PCF basierend auf der zweiten Nachricht,
wobei das Verfahren nach dem Übertragen (303) einer ersten Nachricht durch die PCF an eine erste Funktion gemäß mindestens entweder dem aktualisierten Kommunikationsverwaltungsregelsatz und/oder dem aktualisierten Rechenleistungsverwaltungsregelsatz ferner Folgendes umfasst:
Empfangen einer dritten Nachricht, die durch die erste Funktion übertragen wird und die verwendet wird, um auf die erste Nachricht zu antworten, durch die PCF.

11. Verfahren nach Anspruch 7, wobei die zweite Nachricht mindestens eine der folgenden Angaben umfasst:
eine Endgerätekennung;
eine Rechendienstkennung;
eine Protokolldateneinheits(PDU)-Sitzungskennung;
eine Rechensitzungskennung;
ein Rechendiensterfordernis;
ein Rechendienst-Qualitätserfahrungs(QoE)-Erfordernis;
einen Datennetzwerknamen, DNN; und
Einzel-Netzwerkscheibenauswahlunterstützungsinformationen, S-NSSAI,
wobei das Rechendiensterfordernis mindestens eine der folgenden Angaben umfasst: Verzögerungsinformationen des Rechendienstes, eine Genauigkeitsrate des Rechendienstes, ein Rechenvolumen des Rechendienstes, ein Speichererfordernis, eine Art des Rechendienstes und eine IP-Adresse des Rechendienstes,
wobei die Rechenleistungsressource mindestens eine der folgenden Ressourcen umfasst: eine Rechenressource und eine Speicherressource,
wobei die erste Nachricht mindestens eine der folgenden Angaben umfasst:
eine Endgerätekennung;
eine Protokolldateneinheits(PDU)-Sitzungskennung;
eine Rechensitzungskennung;
einen aktualisierten Rechenleistungsverwaltungsregelsatz; und
einen aktualisierten Kommunikationsverwaltungsregelsatz.

12. Verfahren zur Aktualisierung einer Rechensitzung, umfassend:
Erhalten (401) einer durch eine erste Funktion übertragenen Benachrichtigungsnachricht durch eine Zugriffs- und Mobilitätsverwaltungsfunktion, AMF, wobei die erste Funktion mindestens entweder eine Sitzungsverwaltungsfunktion, SMF, und/oder eine Rechenleistungsverwaltungsfunktion umfasst und die Benachrichtigungsnachricht ausgelöst wird, nachdem die erste Funktion mindestens entweder eine Rechenleistungsressource und/oder eine Kommunikationsressource für eine Rechensitzung basierend auf einer ersten Nachricht aktualisiert, **dadurch gekennzeichnet, dass**
die Rechenleistungsverwaltungsfunktion ein Netzwerkelement zum Verwalten und Steuern eines Rechen- und Speicherressourcenknotens ist und die Rechensitzung eine Sitzung ist, die sowohl eine Kommunikationsressource als auch eine Rechenleistungsressource umfasst und die hergestellt wird, um einem Rechendiensterfordernis eines Benutzers zu genügen.

13. Verfahren nach Anspruch 12, wobei das Verfahren nach dem Erhalten (401) einer durch eine erste Funktion übertragenen Benachrichtigungsnachricht durch eine AMF ferner mindestens einen der folgenden Vorgänge umfasst:
Übertragen einer vierten Nachricht durch die AMF an ein Endgerät basierend auf der Benachrichtigungsnachricht, wobei die vierte Nachricht verwendet wird, um mindestens entweder eine Rechenleistungsressource und/oder eine Kommunikationsressource, die durch die erste Funktion für die Rechensitzung aktualisiert sind, anzugeben; und
Übertragen einer sechsten Nachricht durch die AMF an eine basisstationsseitige Vorrichtung basierend auf der Benachrichtigungsnachricht, wobei die sechste Nachricht verwendet wird, um die durch die erste Funktion für die Rechensitzung aktualisierte Kommunikationsressource anzugeben.

14. Verfahren nach Anspruch 13, wobei das Verfahren nach dem Übertragen einer vierten Nachricht durch die AMF an ein Endgerät basierend auf der Benachrichtigungsnachricht ferner Folgendes umfasst:
Empfangen einer siebten Nachricht, die durch das Endgerät übertragen wird und die verwendet wird, um auf die vierte Nachricht zu antworten, durch die AMF; und
Übertragen einer fünften Nachricht durch die AMF an die erste Funktion basierend auf der siebten Nachricht, wobei die fünfte Nachricht verwendet wird, um auf die Benachrichtigungsnachricht zu antworten,
wobei die vierte Nachricht mindestens eine der folgenden Angaben umfasst: eine PDU-Sitzungskennung, eine Rechensitzungskennung,
Kommunikationsressourcenaktualisierungsinformationen, eine Kommunikations-QoS-Regel, Rechenleistungsressourcenaktualisierungsinformationen und eine Rechenleistungs-QoS-Regel,
wobei die Rechenleistungsressourcenaktualisierungsinformationen mindestens eine der folgenden Angaben umfassen: eine Rechenressourcen-Internetprotokoll(IP)-Adresse, eine Speicherressourcen-IP-Adresse, eine Rechenressourcengröße und eine Speicherressourcengröße.

15. Netzwerkfunktionsentität, umfassend einen Prozessor, einen Speicher und ein Programm oder Anweisungen, die in dem Speicher gespeichert und fähig sind, auf dem Prozessor abzulaufen, **dadurch gekennzeichnet, dass**, wenn das Programm oder Anweisungen durch den Prozessor ausgeführt werden, die Schritte des Verfahrens zur Aktualisierung einer Rechensitzung nach einem der Ansprüche 1 bis 6 implementiert werden oder die Schritte des Verfahrens zur Aktualisierung einer Rechensitzung nach einem der Ansprüche 7 bis 11 implementiert werden oder die Schritte des Verfahrens zur Aktualisierung einer Rechensitzung nach einem der Ansprüche 12 bis 14 implementiert werden.

## Revendications

1. Procédé de mise à jour de session de calcul, comprenant :
obtenir (201), par une première fonction, un premier message, dans lequel la première fonction comprend au moins l'une d'une fonction de gestion de session, SMF, et d'une fonction de gestion de puissance de calcul, et le premier message est utilisé pour demander de mettre à jour au moins l'une d'une ressource de communication et d'une ressource de puissance de calcul pour une session de calcul ; et
mettre à jour (202), par la première fonction, au moins l'une de la ressource de puissance de calcul et de la ressource de communication pour la session de calcul sur la base du premier message ; **caractérisé en ce que**
la fonction de gestion de puissance de calcul est un élément de réseau pour gérer et contrôler un nœud de ressource de calcul et de stockage, et la session de calcul est une session qui comprend à la fois une ressource de communication et une ressource de puissance de calcul et qui est établie pour répondre à une exigence de service de calcul d'un utilisateur.

2. Procédé selon la revendication 1, dans lequel le premier message comprend au moins l'un des éléments suivants :
un identifiant de terminal ;
un identifiant de session d'unité de données de protocole, PDU ;
un identifiant de session de calcul ;
une politique de gestion de puissance de calcul mise à jour ; et
une politique de gestion de communication mise à jour ;
dans lequel la ressource de puissance de calcul comprend au moins l'un des éléments suivants : une ressource de calcul et une ressource de stockage.

3. Procédé selon la revendication 1, dans lequel l'obtention (201), par une première fonction, d'un premier message comprend :
obtenir, par la première fonction, un premier message transmis par une fonction de contrôle de politique, PCF ;
dans lequel la mise à jour (202), par la première fonction, d'au moins l'une de la ressource de puissance de calcul et de la ressource de communication pour la session de calcul sur la base du premier message, comprend :
obtenir, par la première fonction, au moins l'une d'une politique de gestion de puissance de calcul mise à jour et d'une politique de gestion de la communication mise à jour sur la base du premier message ;
déterminer, par la première fonction, des informations de QoS de communication mises à jour selon la politique de gestion de communication mise à jour obtenue, et mettre à jour l'allocation de la ressource de communication pour la session de calcul sur la base des informations de QoS de communication mises à jour déterminées si la première fonction comprend la SMF et a obtenu la politique de gestion de communication mise à jour ; et
déterminer, par la première fonction, des informations de QoS de puissance de calcul mises à jour selon la politique de gestion de puissance de calcul mise à jour obtenue, et mettre à jour l'allocation de la ressource de puissance de calcul pour la session de calcul sur la base des informations de QoS de puissance de calcul mises à jour déterminées si la première fonction comprend la fonction de gestion de puissance de calcul et a obtenu la politique de gestion de puissance de calcul mise à jour.

4. Procédé selon la revendication 3, dans lequel l'allocation de mise à jour de la ressource de communication pour la session de calcul sur la base des informations de QoS de communication mises à jour déterminées, comprend :
transmettre, par la première fonction, une règle d'interface N4 mise à jour à une fonction de plan utilisateur, UPF, pour permettre à l'UPF de mettre à jour la ressource de communication pour la session de calcul selon la règle d'interface N4 mise à jour, dans laquelle la règle d'interface N4 mise à jour est obtenue sur la base des informations QoS de communication mises à jour ; ou,
dans lequel l'allocation de mise à jour de la ressource de puissance de calcul pour la session de calcul sur la base des informations de QoS de puissance de calcul mises à jour déterminées comprend :
transmettre, par la première fonction, les informations de QoS de puissance de calcul mises à jour à un nœud de ressource de calcul et de stockage, pour permettre au nœud de ressource de calcul et de stockage de mettre à jour la ressource de puissance de calcul pour la session de calcul sur la base des informations de QoS de puissance de calcul mises à jour.

5. Procédé selon la revendication 4, dans lequel après la transmission, par la première fonction, des informations de QoS de puissance de calcul mises à jour à un nœud de ressource de calcul et de stockage, le procédé comprend en outre :
recevoir, par la première fonction, un message de retour transmis par le nœud de ressource de calcul et de stockage, dans lequel le message de retour comprend au moins l'un des éléments suivants : une adresse de protocole Internet, IP, de ressource de calcul, une adresse IP de ressource de stockage, une taille de ressource de calcul et une taille de ressource de stockage.

6. Procédé selon la revendication 1, dans lequel après la mise à jour (202), par la première fonction, d'au moins l'une de la ressource de puissance de calcul et de la ressource de communication pour la session de calcul sur la base du premier message, le procédé comprend en outre :
transmettre, par la première fonction à une PCF, un troisième message utilisé pour répondre au premier message ;
dans lequel après la mise à jour (202), par la première fonction, au moins l'une de la ressource de puissance de calcul et de la ressource de communication pour la session de calcul sur la base du premier message, le procédé comprend en outre :
transmettre, par la première fonction, un quatrième message à un terminal par l'intermédiaire d'une fonction de gestion d'accès et de mobilité, AMF, dans lequel le quatrième message est utilisé pour indiquer au moins l'une d'une ressource de puissance de calcul mise à jour et d'une ressource de communication mise à jour allouées par la première fonction ;
dans lequel la transmission, par la première fonction, d'un quatrième message à un terminal par l'intermédiaire d'une AMF comprend l'un quelconque des éléments suivants :
si la première fonction comprend la SMF, transmettre, par la première fonction, un premier message de notification à l'AMF, de sorte que l'AMF transmette le quatrième message au terminal sur la base du premier message de notification ;
si la première fonction comprend la fonction de gestion de puissance de calcul, transmettre, par la première fonction, un deuxième message de notification à l'AMF, de sorte que l'AMF transmette le quatrième message au terminal sur la base du deuxième message de notification ;
si la première fonction comprend la SMF, recevoir, par la SMF, un état d'allocation de ressource de puissance de calcul de la fonction de gestion de puissance de calcul du côté de la fonction de gestion de puissance de calcul, et transmettre un troisième message de notification à l'AMF, de sorte que l'AMF transmette le quatrième message au terminal sur la base du troisième message de notification ; et
si la première fonction comprend la fonction de gestion de puissance de calcul, recevoir, par la fonction de gestion de puissance de calcul, un état d'allocation des ressources de communication de la SMF depuis le côté SMF, et transmettre un quatrième message de notification à l'AMF, de sorte que l'AMF transmet le quatrième message au terminal sur la base du quatrième message de notification.

7. Procédé de mise à jour de session de calcul, comprenant :
obtenir (301), par une fonction de contrôle de politique, PCF, un deuxième message, dans lequel le deuxième message est utilisé pour demander de mettre à jour au moins l'une d'une politique de gestion de communication et d'une politique de gestion de puissance de calcul ;
déterminer (302), par la PCF, au moins l'une d'une politique de gestion de communication mise à jour et d'une politique de gestion de puissance de calcul mise à jour sur la base du deuxième message ; et
transmettre (303), par la PCF, un premier message à une première fonction selon au moins l'une de la politique de gestion de communication mise à jour et de la politique de gestion de puissance de calcul mise à jour, dans lequel
la première fonction comprend au moins l'une d'une fonction de gestion de session, SMF, et d'une fonction de gestion de puissance de calcul, et le premier message est utilisé pour demander de mettre à jour au moins l'une d'une ressource de communication et d'une ressource de puissance de calcul pour une session de calcul ;
**caractérisé en ce que**
la fonction de gestion de puissance de calcul est un élément de réseau pour gérer et contrôler un nœud de ressource de calcul et de stockage, et la session de calcul est une session qui comprend à la fois une ressource de communication et une ressource de puissance de calcul et qui est établie pour répondre à une exigence de service de calcul d'un utilisateur.

8. Procédé selon la revendication 7, dans lequel l'obtention (301), par une PCF, d'un deuxième message comprend l'un quelconque des éléments suivants :
obtenir, par la PCF, un deuxième message transmis par une fonction applicative AF ;
obtenir, par la PCF, un deuxième message transmis par la SMF si une ressource de communication de la SMF ne répond pas à une ressource de communication prédéfinie ; et
obtenir, par la PCF, un deuxième message transmis par la fonction de gestion de puissance de calcul si une ressource de puissance de calcul de la fonction de gestion de puissance de calcul ne correspond pas à une ressource de puissance de calcul prédéfinie.

9. Procédé selon la revendication 8, dans lequel si la PCF obtient le deuxième message transmis par la SMF ou si la PCF obtient le deuxième message transmis par la fonction de gestion de puissance de calcul, le deuxième message comprend au moins l'un des éléments suivants :
une indication de demande de mise à jour de politique ;
une notification d'état de QoS de communication ; et
une notification d'état de QoS de puissance de calcul.

10. Procédé selon la revendication 7, dans lequel avant la transmission, par la PCF, d'un premier message à une première fonction selon au moins l'une de la politique de gestion de communication mise à jour et de la politique de gestion de puissance de calcul mise à jour, le procédé comprend en outre :
déterminer, par la PCF sur la base du deuxième message, la première fonction correspondant à la session de calcul ;
dans lequel après la transmission (303), par la PCF, d'un premier message à une première fonction selon au moins l'une de la politique de gestion de communication mise à jour et de la politique de gestion de puissance de calcul mise à jour, le procédé comprend en outre :
recevoir, par la PCF, un troisième message transmis par la première fonction et utilisé pour répondre au premier message.

11. Procédé selon la revendication 7, dans lequel le deuxième message comprend au moins l'un des éléments suivants :
un identifiant de terminal ;
un identifiant de service de calcul ;
un identifiant de session d'unité de données de protocole, PDU ;
un identifiant de session de calcul ;
une exigence de service de calcul ;
une exigence de qualité d'expérience du service de calcul, QoE ;
un nom de réseau de données, DNN ; et
des informations d'aide à la sélection de tranche de réseau unique, S-NSSAI ;
dans lequel l'exigence de service de calcul comprend au moins l'un des éléments suivants : des informations de retard du service de calcul, un taux de précision du service de calcul, un volume de calcul du service de calcul, une exigence de stockage, un type de service de calcul et une adresse IP du service de calcul ;
dans lequel la ressource de puissance de calcul comprend au moins l'un des éléments suivants : une ressource de calcul et une ressource de stockage ;
dans lequel le premier message comprend au moins l'un des éléments suivants :
un identifiant de terminal ;
un identifiant de session d'unité de données de protocole, PDU ;
un identifiant de session de calcul ;
une politique de gestion de puissance de calcul mise à jour ; et
une politique de gestion de la communication mise à jour.

12. Procédé de mise à jour de session de calcul, comprenant :
obtenir (401), par une fonction de gestion d'accès et de mobilité, AMF, un message de notification transmis par une première fonction, dans lequel
la première fonction comprend au moins l'une d'une fonction de gestion de session, SMF, et d'une fonction de gestion de puissance de calcul, et le message de notification est déclenché après que la première fonction met à jour au moins l'une d'une ressource de puissance de calcul et d'une ressource de communication pour une session de calcul sur la base d'un premier message ; **caractérisé en ce que**
la fonction de gestion de puissance de calcul est un élément de réseau pour gérer et contrôler un nœud de ressource de calcul et de stockage, et la session de calcul est une session qui comprend à la fois une ressource de communication et une ressource de puissance de calcul et qui est établie pour répondre à une exigence de service de calcul d'un utilisateur.

13. Procédé selon la revendication 12, dans lequel après l'obtention (401), par une AMF, d'un message de notification transmis par une première fonction, le procédé comprend en outre au moins l'un des éléments suivants :
transmettre, par l'AMF, un quatrième message à un terminal sur la base du message de notification, dans lequel le quatrième message est utilisé pour indiquer au moins l'une d'une ressource de puissance de calcul et d'une ressource de communication mises à jour par la première fonction pour la session de calcul ; et
transmettre, par l'AMF, un sixième message à un dispositif côté station de base sur la base du message de notification, dans lequel le sixième message est utilisé pour indiquer la ressource de communication mise à jour par la première fonction pour la session de calcul.

14. Procédé selon la revendication 13, dans lequel après la transmission, par l'AMF, d'un quatrième message à un terminal sur la base du message de notification, le procédé comprend en outre :
recevoir, par l'AMF, un septième message qui est transmis par le terminal et qui est utilisé pour répondre au quatrième message ; et
transmettre, par l'AMF, un cinquième message à la première fonction sur la base du septième message, dans lequel le cinquième message est utilisé pour répondre au message de notification ;
dans lequel le quatrième message comprend au moins l'un des éléments suivants : un identifiant de session PDU, un identifiant de session de calcul, des informations de mise à jour de ressource de communication, une règle de QoS de communication, des informations de mise à jour de ressource de puissance de calcul et une règle de QoS de puissance de calcul ;
dans lequel les informations de mise à jour de ressource de puissance de calcul comprennent au moins l'un des éléments suivants : une adresse de protocole Internet, IP, de ressource de calcul, une adresse IP de ressource de stockage, une taille de ressource de calcul et une taille de ressource de stockage.

15. Entité de fonction réseau, comprenant un processeur, une mémoire et un programme ou des instructions stockés dans la mémoire et capables de s'exécuter sur le processeur, **caractérisée en ce que**, lorsque le programme ou les instructions sont exécutés par le processeur, les étapes du procédé de mise à jour de session de calcul selon l'une quelconque des revendications 1 à 6 sont mises en œuvre, ou les étapes du procédé de mise à jour de session de calcul selon l'une quelconque des revendications 7 à 11 sont mises en œuvre, ou les étapes du procédé de mise à jour de session de calcul selon l'une quelconque des revendications 12 à 14 sont mises en œuvre.
